# EUROPEAN PATENT APPLICATION

(11) **EP 4 322 560 A1**
(43) Date of publication of application: **14.02.2024**
(21) Application number: 22803733.9
(22) Date of filing: 21.04.2022
(51) Int. Cl.: H04W 4/06, H04W 76/40

(54) **SERVICE DATA TRANSMISSION METHOD AND COMMUNICATION APPARATUS**

(30) Priority: 19.05.2021 CN 202110547105; 07.07.2021 CN 202110770305
(71) Applicant: Huawei Technologies Co., Ltd., Longgang Shenzhen, Guangdong 518129 (CN)
(72) Inventor: GE, Cuili, Shenzhen, Guangdong 518129 (CN); YANG, Yanmei, Shenzhen, Guangdong 518129 (CN)
(74) Representative: MERH-IP Matias Erny Reichl Hoffmann Patentanwälte PartG mbB
(86) International application number: PCT/CN2022/088188
(87) International publication number: WO 2022/242409

(57) **Abstract**

This application provides a service data transmission method and a communication apparatus. The method includes: An application server obtains first information of a multicast broadcast service session; and the application server sends data of a service over the multicast broadcast service session based on the first information. In the foregoing technical solution, the application server may determine, based on related information (for example, information of a terminal in the multicast broadcast service session, or information of the multicast broadcast service session) of the multicast broadcast service session, that the data of the service can be transmitted over the multicast broadcast service session. In this way, the data of the service can be transmitted flexibly over the multicast broadcast service session.

## Description

### CROSS-REFERENCE TO RELATED APPLICATIONS

This application claims priority to Chinese Patent Application No. 202110547105.9, filed with the China National Intellectual Property Administration on May 19, 2021 and entitled "SERVICE DATA TRANSMISSION METHOD AND COMMUNICATION APPARATUS", and Chinese Patent Application No. 202110770305.0, filed with the China National Intellectual Property Administration on July 7, 2021 and entitled "SERVICE DATA TRANSMISSION METHOD AND COMMUNICATION APPARATUS", which are incorporated herein by reference in their entireties.

### TECHNICAL FIELD

This application relates to the communication field, and in particular, to a service data transmission method and a communication apparatus.

### BACKGROUND

A multicast broadcast service (multicast broadcast service, MBS) is a service oriented to a plurality of terminals, for example, livestreaming and scheduled program playing. The MBS may be transmitted through multicast, that is, a base station simultaneously sends same content data to a plurality of terminals. Specifically, a multicast broadcast service session may be established for the plurality of terminals to transmit MBS data, and the base station may send only one copy of the MBS data. It can be learned that multicast helps improve resource utilization efficiency. However, how to use a multicast broadcast service session to transmit an MBS is not specified in current protocols.

### SUMMARY

This application provides a service data transmission method and a communication apparatus, so that data of a service can be transmitted flexibly over a multicast broadcast service session.

According to a first aspect, this application provides a service data transmission method. For example, the method may be performed by an application server, or may be performed by a component (for example, a circuit, a chip, or a chip system) configured in the application server. This is not limited in this application. The method includes:

The application server obtains first information of a multicast broadcast service session; and
the application server sends data of a service over the multicast broadcast service session based on the first information.

Optionally, the first information includes at least one of the following: information about at least one terminal related to the multicast broadcast service session, a status or an association event of the multicast broadcast service session, and a connection status of a terminal that has joined the multicast broadcast service session, where the at least one terminal is provided with the service by the application server.

In the foregoing technical solution, the application server may determine, based on the related information of the multicast broadcast service session (for example, information of a terminal in the multicast broadcast service session, or information of the multicast broadcast service session), that data of a service can be transmitted over the multicast broadcast service session. In this way, the data of the service can be transmitted flexibly over the multicast broadcast service session.

With reference to the first aspect, in a possible implementation, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

With reference to the first aspect or any possible implementation of the first aspect, in another possible implementation, the status or association event of the multicast broadcast service session includes at least one of the following: A terminal joins the multicast broadcast service session, a terminal leaves the multicast broadcast service session, and the multicast broadcast service session changes into an active state.

The association event of the multicast broadcast service session may be understood as an event associated with or related to the session, for example, the foregoing event in which a terminal joins the multicast broadcast service session or the foregoing event in which a terminal leaves the multicast broadcast service session. Alternatively, the association event of the multicast broadcast service session may be considered as a state of the session. This is not limited.

With reference to the first aspect or any possible implementation of the first aspect, in another possible implementation, that the application server sends data of a service over the multicast broadcast service session based on the first information includes: The application server determines, based on the first information, that a quantity of terminals that have joined the multicast broadcast service session reaches a preset value, that a specific terminal has joined the multicast broadcast service session, or that the multicast broadcast service session changes into the active state; and the application server sends the data of the service over the multicast broadcast service session.

In the foregoing technical solution, the application server may determine, based on the related information of the multicast broadcast service session, the quantity of terminals that have joined the multicast broadcast service session, whether a specific terminal has joined the multicast broadcast service session, or whether the multicast broadcast service session is in the active state. In this way, when the quantity of terminals that have joined the multicast broadcast service session reaches the preset value, the specific terminal has joined the multicast broadcast service session, or the multicast broadcast service session is in the active state, the service data is transmitted over the multicast broadcast service session. The condition that the quantity of terminals that have joined the multicast broadcast service session reaches a specific value needs to be met, to avoid waste of resources. The condition that the specific terminal has joined the multicast broadcast service session needs to be met, to ensure that a key terminal is in the session.

With reference to the first aspect or any possible implementation of the first aspect, in another possible implementation, the method further includes: If a first terminal has joined the multicast broadcast service session, the application server stops sending the data of the multicast broadcast service to the first terminal through unicast; or if a second terminal has joined the multicast broadcast service session and the second terminal is in an idle state, the application server sends the data of the multicast broadcast service to the second terminal through unicast.

In the foregoing technical solution, on the premise that the application server determines to transmit the data of the service over the multicast broadcast service session, the application server may stop sending, through unicast, the data to the terminal that has joined the multicast broadcast service session, thereby avoiding waste of resources. Alternatively, for the terminal that has joined the multicast broadcast service session and that is in the idle state, the service data is still transmitted through unicast, to ensure service data transmission for the terminal in the idle state.

With reference to the first aspect or any possible implementation of the first aspect, in another possible implementation, the method further includes: The application server obtains second information of the multicast broadcast service session; and the application server stops sending the data of the service over the multicast broadcast service session based on the second information.

Optionally, the second information includes at least one of the following: information about at least one terminal related to the multicast broadcast service session, a status or an association event of the multicast broadcast service session, and a connection status of a terminal that has joined the multicast broadcast service session, where the at least one terminal is provided with the service by the application server.

In the foregoing technical solution, the application server may determine, based on the related information of the multicast broadcast service session (for example, information of a terminal in the multicast broadcast service session, or information of the multicast broadcast service session), to stop transmitting the data of the service over the multicast broadcast service session. In this way, the data of the service can be transmitted flexibly over the multicast broadcast service session.

With reference to the first aspect or any possible implementation of the first aspect, in another possible implementation, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

With reference to the first aspect or any possible implementation of the first aspect, in another possible implementation, the status or association event of the multicast broadcast service session includes at least one of the following: A terminal joins the multicast broadcast service session, a terminal leaves the multicast broadcast service session, a last terminal of the service has left the multicast broadcast service session, and the multicast broadcast service session changes into an inactive state.

With reference to the first aspect or any possible implementation of the first aspect, in another possible implementation, that the application server stops sending the data of the service over the multicast broadcast service session based on the second information includes: The application server determines, based on the second information, that a quantity of terminals that have joined the multicast broadcast service session does not reach a preset value, that a specific terminal has left the multicast broadcast service session, that the last terminal of the service has left the multicast broadcast service session, or that the multicast broadcast service session changes into the inactive state; and the application server stops sending the data of the service over the multicast broadcast service session.

In the foregoing technical solution, the application server may determine, based on the related information of the multicast broadcast service session, the quantity of terminals that have joined the multicast broadcast service session, whether a specific terminal has joined the multicast broadcast service session, or whether the multicast broadcast service session is in the active state. Therefore, when the quantity of terminals that have j oined the multicast broadcast service session does not reach the preset value, a specific terminal does not join the multicast broadcast service session, or the multicast broadcast service session is in the inactive state, service data transmission over the multicast broadcast service session is stopped. In this way, the data of the service can be transmitted flexibly over the multicast broadcast service session.

With reference to the first aspect or any possible implementation of the first aspect, in another possible implementation, before that an application server obtains first information of a multicast broadcast service session, the method further includes: The application server determines that the data of the service is to be sent; and the application server sends seventh information to a core network device, where the seventh information is used to activate the multicast broadcast service session.

In this way, before the application server sends the service data, it can be ensured that the terminal that has joined the multicast broadcast service session is in a connected state. This helps reduce a probability of packet loss.

With reference to the first aspect or any possible implementation of the first aspect, in another possible implementation, before that the application server sends seventh information to a core network device, the method further includes: The application server obtains the status of the multicast broadcast service session and/or the connection status of the terminal that has joined the multicast broadcast service session; and the application server determines to initiate a multicast broadcast service session activation procedure when at least one of the following cases is met. The multicast broadcast service session is in the inactive state. A quantity of terminals that have joined the multicast broadcast service session and that are in the idle state and/or inactive state reaches a second threshold. A quantity of terminals that have joined the multicast broadcast service session and that are in a connected state is less than a third threshold.

With reference to the first aspect or any possible implementation of the first aspect, in another possible implementation, before that an application server obtains first information of a multicast broadcast service session, the method further includes: The application server determines that the data of the service is to be sent; and that the application server sends data of a service over the multicast broadcast service session based on the first information includes: The application server determines, based on the first information, that the multicast broadcast service session is in an inactive state, and/or that a quantity of terminals that have joined the multicast broadcast service session and that are in an idle state and/or inactive state reaches a second threshold, and/or that a quantity of terminals that have joined the multicast broadcast service session and that are in a connected state is less than a third threshold; the application server sends seventh information to a core network device, where the seventh information is used to activate the multicast broadcast service session; and the application server sends the data of the service over the multicast broadcast service session when a trigger condition is met.

In this way, before the application server sends the service data, it can be ensured that the terminal that has joined the multicast broadcast service session is in the connected state. This helps reduce a probability of packet loss.

With reference to the first aspect or any possible implementation of the first aspect, in another possible implementation, the core network device is the session management function serving the multicast broadcast service session, and the seventh information is a session activation request message; or the core network device is a user plane function serving the multicast broadcast service session, and the seventh information is user plane data.

With reference to the first aspect or any possible implementation of the first aspect, in another possible implementation, the user plane data is at least one copy of the data of the service; or the user plane data is a subset of the data of the service; or the user plane data is control plane signaling information related to the data of the service; or the user plane data is redundant data.

With reference to the first aspect or any possible implementation of the first aspect, in another possible implementation, the trigger condition includes at least one of the following: A session activation response message from a session management function serving the multicast broadcast service session is received, where the session activation response message indicates that the multicast broadcast service session is successfully activated or the session management function serving the multicast broadcast service session accepts a request for activating the multicast broadcast service session; a notification message from the session management function serving the multicast broadcast service session is received, where the notification message indicates that the multicast broadcast service session changes into an active state; a first timer expires, where the first timer is started after the application server sends the seventh information; and an amount of received eighth information reaches a first threshold, where the eighth information is from a terminal and indicates that the terminal successfully receives the seventh information, and the seventh information is the user plane data.

With reference to the first aspect or any possible implementation of the first aspect, in another possible implementation, that an application server obtains first information of a multicast broadcast service session includes: The application server receives the first information from the core network device. In this way, the application server may determine, based on the related information that is of the multicast broadcast service session and that is received from the core network device, that a user has joined the multicast broadcast service session and is able to receive data, so that the application server may start to send data over the multicast broadcast service session. This prevents service data loss and resource waste caused when no user receives data.

With reference to the first aspect or any possible implementation of the first aspect, in another possible implementation, the method further includes: The application server requests for or subscribes to the first information from the core network device.

With reference to the first aspect or any possible implementation of the first aspect, in another possible implementation, that the application server subscribes to the first information from the core network device includes: The application server sends a first request message or a subscription message to the core network device, where the first request message is used to request for the first information, the subscription message is used for subscription to the first information, and the first request message or the subscription message includes a multicast broadcast service session identity.

With reference to the first aspect or any possible implementation of the first aspect, in another possible implementation, the first request message or the subscription message further includes an identifier of the at least one terminal and/or an identifier of a group corresponding to the multicast broadcast service session.

If the application server requests for or subscribes to information of per UE from the core network device, the first request message or the subscription message may include an identifier of at least one terminal and/or an identifier of a group, so that the core network device learns of terminals with the foregoing information requested for or subscribed to by the application server.

With reference to the first aspect or any one possible implementation of the first aspect, in another possible implementation, the core network device is unified data management (unified data management, UDM), a multicast-serving session management function (session management function, SMF), a unicast-serving SMF, or an access and mobility management function (access and mobility management function, AMF).

With reference to the first aspect or any possible implementation of the first aspect, in another possible implementation, that an application server obtains first information of a multicast broadcast service session includes: The application server receives the first information from the at least one terminal, where the at least one terminal is provided with the service by the application server. In this way, the application server can determine, based on information that is about the multicast broadcast service session and that is reported by at least one terminal user, that the at least one user has successfully joined the multicast broadcast service session and is able to receive data transmitted on the session. Then, the server can determine a quantity of users, whether a specific user successfully joins the session and is able to receive the data transmitted on the session, and the like, and start sending the data over the multicast broadcast service session. In this way, service data loss and resource waste caused when no one receives the data can be avoided, and flexible control of when to send the service data on the multicast and broadcast session can be implemented.

With reference to the first aspect or any possible implementation of the first aspect, in another possible implementation, the method further includes: The application server sends a first message to the terminal of the service, where the first message is used to trigger report of the first information.

With reference to the first aspect or any possible implementation of the first aspect, in another possible implementation, the first message includes a condition for triggering report of the first information.

The first message includes the condition for triggering report of the first information, so that the terminal reports the first information only when a specific condition is met, and repeated report is avoided. In this way, signaling overheads can be reduced.

With reference to the first aspect or any possible implementation of the first aspect, in another possible implementation, the method further includes: The application server sends third information to the terminal of the service, where the third information indicates that a type of the multicast broadcast service session is multicast.

For multicast and broadcast, the terminal may report different first information. For example, for multicast, the terminal may report the information about the terminal related to the multicast broadcast service session; and for broadcast, the terminal may report whether the data of the multicast broadcast service session can be received. The application server indicates the type of the multicast broadcast service session to the terminal, so that the terminal can report correct information.

With reference to the first aspect or any possible implementation of the first aspect, in another possible implementation, a type or name of the first message indicates that a type of the multicast broadcast service session is multicast; or the first message includes fourth information, where the fourth information indicates that the type of the multicast broadcast service session is multicast.

For multicast and broadcast, the terminal may report different first information. For example, for multicast, the terminal may report the information about the terminal related to the multicast broadcast service session; and for broadcast, the terminal may report whether the data of the multicast broadcast service session can be received. The application server indicates the type of the multicast broadcast service session to the terminal, so that the terminal can report correct information. However, the first message is reused to indicate the type of the multicast broadcast service session, so that signaling overheads can be reduced.

With reference to the first aspect or any possible implementation of the first aspect, in another possible implementation, the first message carries the fourth information by using a format or type of a multicast broadcast service session identity or a session type parameter.

With reference to the first aspect or any possible implementation of the first aspect, in another possible implementation, the method further includes: The application server sends fifth information to the terminal of the service, where the fifth information includes a join mode of the multicast broadcast service session.

By specifying the join mode in which the terminal joins the multicast broadcast service session, a probability that the terminal successfully joins the session can be increased.

With reference to the first aspect or any possible implementation of the first aspect, in another possible implementation, when the join mode of the multicast broadcast service session includes at least two join modes, the fifth information further includes priorities of the at least two join modes.

With reference to the first aspect or any possible implementation of the first aspect, in another possible implementation, the method further includes: The application server obtains sixth information, where the sixth information includes a join mode supported by the terminal of the service; and the application server determines the join mode of the multicast broadcast service session based on the join mode supported by the terminal of the service.

The application server determines an actual join mode of the terminal based on the join mode supported by the terminal, so that a case in which the terminal does not support a join mode specified by the application server can be avoided, and a probability that the terminal successfully joins the session can be increased.

With reference to the first aspect or any possible implementation of the first aspect, in another possible implementation, the join mode of the multicast broadcast service session includes at least one of the following: a user plane mode, a control plane mode, or both the user plane and the control plane mode.

According to a second aspect, this application provides a service data transmission method. For example, the method may be performed by a terminal, or may be performed by a component (such as a circuit, a chip, or a chip system) configured in the terminal. This is not limited in this application. The method includes:

The terminal obtains first information of a multicast broadcast service session; and
the terminal sends the first information to an application server.

Optionally, the first information includes at least one of the following: The terminal has joined the multicast broadcast service session, the terminal has activated the multicast broadcast service session, the terminal has left the multicast broadcast service session, the terminal has deactivated the multicast broadcast service session, the terminal has suspended the multicast broadcast service session, and the terminal has switched from a first communication system to a second communication system and joined the multicast broadcast service session, where the first communication system does not support multicast, and the second communication system supports multicast.

In the foregoing technical solution, the terminal may report, to the application server, related information of the multicast broadcast service session (for example, information of a terminal in the multicast broadcast service session), so that the application server can determine, based on the reported information, whether to send data of a service over the multicast broadcast service session. In this way, the data of the service can be transmitted flexibly over the multicast broadcast service session.

With reference to the second aspect or any possible implementation of the second aspect, in another possible implementation, the method further includes: The terminal receives a first message from the application server, where the first message is used to trigger report of the first information; and that the terminal sends the first information to an application server includes: The terminal sends the first information to the application server based on the first message.

With reference to the second aspect or any possible implementation of the second aspect, in another possible implementation, the first message includes a condition for triggering report of the first information.

The first message includes the condition for triggering report of the first message, so that the terminal reports the first information only when a specific condition is met, and repeated report is avoided. In this way, signaling overheads can be reduced.

With reference to the second aspect or any possible implementation of the second aspect, in another possible implementation, the method further includes: The terminal receives third information from the application server, where the third information indicates that a type of the multicast broadcast service session is multicast; and the terminal determines, based on the third information, that the type of the multicast broadcast service session is multicast.

For multicast and broadcast, the terminal may report different first information. For example, for multicast, the terminal may report the information about the terminal related to the multicast broadcast service session; and for broadcast, the terminal may report whether the data of the multicast broadcast service session can be received. The application server indicates the type of the multicast broadcast service session to the terminal, so that the terminal can report correct information.

With reference to the second aspect or any possible implementation of the second aspect, in another possible implementation, the method further includes: The terminal determines, based on a type or name of the first message or fourth information included in the first message, that the type of the multicast broadcast service session is multicast, where the fourth information indicates that the type of the multicast broadcast service session is multicast.

For multicast and broadcast, the terminal may report different first information. For example, for multicast, the terminal may report the information about the terminal related to the multicast broadcast service session; and for broadcast, the terminal may report whether the data of the multicast broadcast service session can be received. The application server indicates the type of the multicast broadcast service session to the terminal, so that the terminal can report correct information. However, the first message is reused to indicate the type of the multicast broadcast service session, so that signaling overheads can be reduced.

With reference to the second aspect or any possible implementation of the second aspect, in another possible implementation, the first message carries the fourth information by using a format or type of a multicast broadcast service session identity or a session type parameter.

With reference to the second aspect or any possible implementation of the second aspect, in another possible implementation, the method further includes: The terminal receives fifth information from the application server, where the fifth information includes a join mode in which the terminal joins the multicast broadcast service session; and that the terminal joins the multicast broadcast service session includes: The terminal joins the multicast broadcast service session based on the fifth information.

By specifying the join mode in which the terminal joins the multicast broadcast service session, a probability that the terminal successfully joins the session can be increased.

With reference to the second aspect or any possible implementation of the second aspect, in another possible implementation, when the join mode of the multicast broadcast service session includes at least two join modes, the fifth information further includes priorities of the at least two join modes.

With reference to the second aspect or any possible implementation of the second aspect, in another possible implementation, the method further includes: The terminal sends sixth information to the application server, where the sixth information includes a join mode supported by the terminal.

The terminal reports the supported join mode to the application server, and therefore, the application server can determine an actual join mode of the terminal based on the join mode supported by the terminal, so that a case in which the terminal does not support a join mode specified by the application server can be avoided, and a probability that the terminal successfully joins the session can be increased.

With reference to the second aspect or any possible implementation of the second aspect, in another possible implementation, the join mode of the multicast broadcast service session includes at least one of the following: a user plane mode, a control plane mode, or both the user plane and the control plane mode.

With reference to the second aspect or any possible implementation of the second aspect, in another possible implementation, the method further includes: The terminal receives seventh information from the application server, where the seventh information is user plane data; and the terminal sends eighth information to the application server, where the eighth information indicates that the seventh information is successfully received.

With reference to the second aspect or any possible implementation of the second aspect, in another possible implementation, the user plane data is at least one copy of the data of the service; or the user plane data is a subset of the data of the service; or the user plane data is control plane signaling information related to the data of the service; or the user plane data is redundant data.

With reference to the second aspect or any possible implementation of the second aspect, in another possible implementation, the method further includes: The terminal discards the seventh information.

According to a third aspect, this application provides a service data transmission method. For example, the method may be performed by a core network device, or may be performed by a component (such as a circuit, a chip, or a chip system) configured in the core network device. This is not limited in this application. The method includes:

The core network device obtains first information of a multicast broadcast service session; and
the core network device sends the first information to an application server.

Optionally, the first information includes at least one of the following: information about at least one terminal related to the multicast broadcast service session, a status or an association event of the multicast broadcast service session, and a connection status of a terminal that has joined the multicast broadcast service session, where the at least one terminal is provided with a service by the application server.

In the foregoing technical solution, the core network device may provide, to the application server, related information of the multicast broadcast service session (for example, information of a terminal in the multicast broadcast service session, or information of the multicast broadcast service session), so that the application server can determine, based on the obtained information, to transmit data of the service over the multicast broadcast service session. In this way, the data of the service can be transmitted flexibly over the multicast broadcast service session.

With reference to the third aspect or any possible implementation of the third aspect, in another possible implementation, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

With reference to the third aspect or any possible implementation of the third aspect, in another possible implementation, the status or association event of the multicast broadcast service session includes at least one of the following: A terminal joins the multicast broadcast service session, a terminal leaves the multicast broadcast service session, and the multicast broadcast service session changes into an active state.

The association event of the multicast broadcast service session may be understood as an event associated with or related to the session, for example, the foregoing event in which a terminal joins the multicast broadcast service session or the foregoing event in which a terminal leaves the multicast broadcast service session. Alternatively, the association event of the multicast broadcast service session may be considered as a state of the session. This is not limited.

With reference to the third aspect or any possible implementation of the third aspect, in another possible implementation, the method further includes: The core network device obtains second information of the multicast broadcast service session; and the core network device sends the second information to the application server.

Optionally, the second information includes at least one of the following: the information about the at least one terminal related to the multicast broadcast service session, the status or association event of the multicast broadcast service session, and the connection status of the terminal that has joined the multicast broadcast service session, where the at least one terminal is provided with the service by the application server.

In the foregoing technical solution, the core network device may provide, to the application server, related information of the multicast broadcast service session, so that the application server can determine, based on the obtained information, to stop transmitting the data of the service over the multicast broadcast service session. In this way, the data of the service can be transmitted flexibly over the multicast broadcast service session.

With reference to the third aspect or any possible implementation of the third aspect, in another possible implementation, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

With reference to the third aspect or any possible implementation of the third aspect, in another possible implementation, the status or association event of the multicast broadcast service session includes at least one of the following: A terminal joins the multicast broadcast service session, a terminal leaves the multicast broadcast service session, a last terminal of the service has left the multicast broadcast service session, and the multicast broadcast service session changes into an inactive state.

With reference to the third aspect or any possible implementation of the third aspect, in another possible implementation, the method further includes: The core network device receives a first request message or a subscription message from the application server, where the first request message is used to request for the first information, the subscription message is used for subscription to the first information, and the first request message or the subscription message includes a multicast broadcast service session identity.

With reference to the third aspect or any possible implementation of the third aspect, in another possible implementation, the first request message or the subscription message further includes an identifier of the at least one terminal and/or an identifier of a group corresponding to the multicast broadcast service session.

If the application server requests for or subscribes to information of per UE from the core network device, the first request message or the subscription message may include an identifier of at least one terminal and/or an identifier of a group, so that the core network device learns of terminals with the foregoing information requested for or subscribed to by the application server.

With reference to the third aspect or any possible implementation of the third aspect, in another possible implementation, the core network device is UDM, a multicast-serving SMF, a unicast-serving SMF, or an AMF.

With reference to the third aspect or any possible implementation of the third aspect, in another possible implementation, when the core network device is the UDM or the multicast-serving SMF, that the core network device obtains first information of a multicast broadcast service session includes: The core network device obtains the first information from the unicast-serving SMF and or AMF.

According to a fourth aspect, this application provides a service data transmission method. The method includes: An application server determines that data of a service is to be sent; the application server sends seventh information to a core network device, where the seventh information is used to activate a multicast broadcast service session; and the application server sends the data of the service over the multicast broadcast service session when a trigger condition is met.

In the foregoing technical solution, when determining to send the data of the service, the application server may execute a multicast broadcast service session activation procedure, to ensure that, before the data of the service is sent, a terminal that has joined the multicast broadcast service session is in a connected state. This helps reduce a probability of packet loss.

With reference to the fourth aspect, in another possible implementation, the core network device is a session management function serving the multicast broadcast service session, and the seventh information is a session activation request message; or the core network device is a user plane function serving the multicast broadcast service session, and the seventh information is user plane data.

With reference to the fourth aspect or any possible implementation of the fourth aspect, in another possible implementation, the user plane data is at least one copy of the data of the service; or the user plane data is a subset of the data of the service; or the user plane data is control plane signaling information related to the data of the service; or the user plane data is redundant data.

With reference to the fourth aspect or any possible implementation of the fourth aspect, in another possible implementation, the trigger condition includes at least one of the following: A session activation response message from the session management function serving the multicast broadcast service session is received, where the session activation response message indicates that the multicast broadcast service session is successfully activated or the session management function serving the multicast broadcast service session accepts a request for activating the multicast broadcast service session; a notification message from the session management function serving the multicast broadcast service session is received, where the notification message indicates that the multicast broadcast service session changes into an active state; a first timer expires, where the first timer is started after the application server sends the seventh information; and an amount of received eighth information reaches a first threshold, where the eighth information is from a terminal and indicates that the terminal successfully receives the seventh information, and the seventh information is the user plane data.

With reference to the fourth aspect or any possible implementation of the fourth aspect, in another possible implementation, the method further includes: The application server obtains a status of the multicast broadcast service session and/or a connection status of a terminal that has joined the multicast broadcast service session; and the application server determines to initiate the multicast broadcast service session activation procedure when at least one of the following cases is met: The multicast broadcast service session is in an inactive state; a quantity of terminals that have joined the multicast broadcast service session and that are in an idle state and/or inactive state reaches a second threshold; and a quantity of terminals that have joined the multicast broadcast service session and that are in a connected state is less than a third threshold.

According to a fifth aspect, this application provides a service data transmission method. The method includes: A terminal receives seventh information from an application server, where the seventh information is user plane data; and the terminal sends eighth information to the application server, where the eighth information indicates that the seventh information is successfully received.

In the foregoing technical solution, the application server may send the user plane data to the terminal. After receiving the user plane data, the terminal may feed back to the application server that the terminal correctly receives the user plane data, so that the application server determines, based on the feedback of the terminal, whether data of a service can be sent to the terminal. In this way, before the data of the service is sent, it can be ensured that the terminal that has joined the multicast broadcast service session is in the connected state. This helps reduce a probability of packet loss.

With reference to the fifth aspect, in a possible implementation, the user plane data is at least one copy of the data of the service; or the user plane data is a subset of the data of the service; or the user plane data is control plane signaling information related to the data of the service; or the user plane data is redundant data.

With reference to the fifth aspect or any possible implementation of the fifth aspect, in another possible implementation, the terminal discards the seventh information.

According to a sixth aspect, this application provides a communication apparatus, including modules or units configured to perform the method in any one of the possible implementations of the first aspect to the fifth aspect.

According to a seventh aspect, this application provides a communication apparatus including a processor. The processor is coupled to a memory, and may be configured to execute instructions or data in the memory, to implement the method in any one of the possible implementations of the first aspect to the fifth aspect. Optionally, the apparatus further includes a memory. Optionally, the apparatus further includes a communication interface, and the processor is coupled to the communication interface.

In an implementation, the apparatus is an application server, a terminal, or a core network device. When the communication apparatus is the application server, the terminal, or the core network device, the communication interface may be a transceiver or an input/output interface.

In another implementation, the apparatus is a chip configured in the application server, the terminal, or the core network device. When the communication apparatus is configured in the application server, the terminal, or the core network device, the communication interface may be an input/output interface.

Optionally, the transceiver may be a transceiver circuit. Optionally, the input/output interface may be an input/output circuit.

According to an eighth aspect, this application provides a processor, including an input circuit, an output circuit, and a processing circuit. The processing circuit is configured to: receive a signal via the input circuit, and transmit a signal via the output circuit, so that the processor is enabled to perform the method in any one of the possible implementations of the first aspect to the fifth aspect.

In a specific implementation process, the foregoing processor may be one or more chips. The input circuit may be an input pin. The output circuit may be an output pin. The processing circuit may be a transistor, a gate circuit, a trigger, various logic circuits, and the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, which is used as the input circuit and the output circuit at different moments. Specific implementations of the processor and the circuits are not limited in embodiments of this application.

According to a ninth aspect, this application provides a processing apparatus, including a processor and a memory. The processor is configured to: read instructions stored in the memory, receive a signal through a receiver, and transmit a signal through a transmitter, to perform the method in any one of the possible implementations of the first aspect to the fifth aspect.

Optionally, there are one or more processors, and there are one or more memories.

Optionally, the memory and the processor may be integrated together, or the memory and the processor are disposed separately.

In a specific implementation process, the memory may be a non-transitory (non-transitory) memory, for example, a read only memory (read only memory, ROM). The memory and the processor may be integrated into a same chip, or may be separately disposed on different chips. A type of the memory and a manner of disposing the memory and the processor are not limited in embodiments of this application.

It should be understood that, in a related data exchange process, for example, sending indication information may be a process of outputting indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the ninth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently outside the processor.

According to a tenth aspect, this application provides a computer program product. The computer program product includes a computer program (which may also be referred to as code or an instruction). When the computer program is run, a computer is enabled to perform the method in any one of the possible implementations of the first aspect to the fifth aspect.

According to an eleventh aspect, a computer-readable storage medium is provided. The computer-readable storage medium stores a computer program (which may also be referred to as code or an instruction). When the computer program is run on a computer, the computer is enabled to perform the method in any one of the possible implementations of the first aspect to the fifth aspect.

According to a twelfth aspect, a communication system is provided, including one or more of the foregoing application server, terminal, or core network device.

### BRIEF DESCRIPTION OF DRAWINGS

FIG. 1 is a schematic diagram of a network architecture for a method according to an embodiment of this application;
FIG. 2 is a schematic diagram of a multicast broadcast service architecture that is applicable to a method according to an embodiment of this application;
FIG. 3 is a schematic diagram of service data transmission according to an embodiment of this application;
FIG. 4 is a schematic diagram of service data transmission according to an embodiment of this application;
FIG. 5 is a schematic diagram of several service data transmission paths;
FIG. 6 is a schematic flowchart of a service data transmission method 600 according to an embodiment of this application;
FIG. 7 is a schematic flowchart of a service data transmission method 700 according to an embodiment of this application;
FIG. 8 is a schematic flowchart of a service data transmission method 800 according to an embodiment of this application;
FIG. 9 is a schematic flowchart of a service data transmission method 900 according to an embodiment of this application;
FIG. 10 is a schematic flowchart of a service data transmission method 1000 according to an embodiment of this application;
FIG. 11 is a schematic flowchart of a service data transmission method 1100 according to an embodiment of this application;
FIG. 12 is a schematic flowchart of a service data transmission method 1200 according to an embodiment of this application;
FIG. 13 is a schematic flowchart of a service data transmission method 1300 according to an embodiment of this application;
FIG. 14 is a schematic flowchart of a service data transmission method 1400 according to an embodiment of this application;
FIG. 15 is a schematic flowchart of a service data transmission method 1500 according to an embodiment of this application;
FIG. 16 is a schematic flowchart of a service data transmission method 1600 according to an embodiment of this application;
FIG. 17 is a schematic flowchart of a service data transmission method 1700 according to an embodiment of this application;
FIG. 18 is a schematic flowchart of a service data transmission method 1800 according to an embodiment of this application;
FIG. 19A and FIG. 19B are a schematic flowchart of a service data transmission method 1900 according to an embodiment of this application;
FIG. 20 is a schematic diagram of a structure of a communication apparatus according to an embodiment of this application; and
FIG. 21 is a schematic diagram of another structure of a communication apparatus according to an embodiment of this application.

### DESCRIPTION OF EMBODIMENTS

The following describes technical solutions in this application with reference to accompanying drawings.

The technical solutions in embodiments of this application can be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, new radio (new radio, NR), or another evolved communication system.

The technical solutions provided in this application may be further applied to a future communication system, for example, a 6th generation mobile communication system. This is not limited in this application.

The technical solutions provided in this application may be further applied to machine type communication (machine type communication, MTC), a long term evolution-machine (long term evolution-machine, LTE-M) technology, a device-to-device (device-to-device, D2D) network, a machine to machine (machine to machine, M2M) network, an internet of things (internet of things, IoT) network, or another network. The IoT network may include, for example, an internet of vehicles. Communication modes in a system of the internet of vehicles are collectively referred to as vehicle to X (vehicle to X, V2X, where X may represent everything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

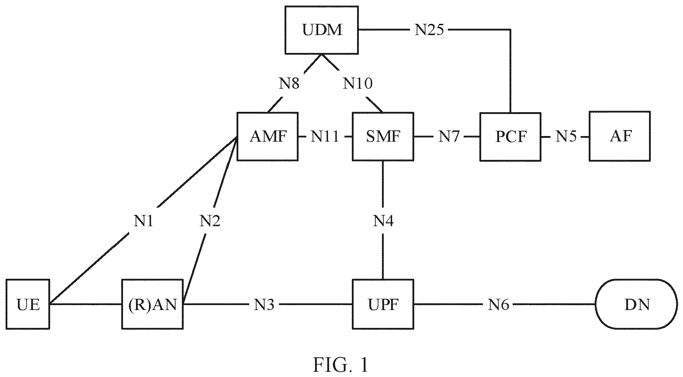

FIG. 1 is a schematic diagram of a network architecture that is applicable to a method according to an embodiment of this application.

As shown in FIG. 1, the network architecture is, for example, the 5th generation system (the 5th generation system, 5GS) defined in the 3rd Generation Partnership Project (3rd Generation Partnership Project, 3GPP) protocol TS23.501. The network architecture may be divided into two parts: an access network (access network, AN) and a core network (core network, CN). The access network may be configured to implement a function related to radio access. The core network mainly includes the following key logical network elements: an access and mobility management function (access and mobility management function, AMF), a session management function (session management function, SMF), a user plane function (user plane function, UPF), a policy control function (policy control function, PCF), unified data management (unified data management, UDM), and the like.

The following briefly describes the network elements shown in FIG. 1.

### 1. User equipment (user equipment, UE)

The user equipment may also be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or an in-vehicle device that has a wireless connection function. Currently, examples of the terminal are: a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a terminal device in a 5G network, or a terminal device in a future evolved public land mobile network (public land mobile network, PLMN). This is not limited in embodiments of this application.

As an example rather than a limitation, in embodiments of this application, the terminal device may alternatively be a wearable device. The wearable device may alternatively be referred to as a wearable intelligent device, and is a generic term for wearable devices such as glasses, gloves, watches, clothes, and shoes that are developed based on intelligent design of daily wearing by using wearable technologies. The wearable device is a portable device that can be directly worn on a body or integrated into a piece of clothing or an accessory of a user. The wearable device is a hardware device, and implements powerful functions through software support, data exchange, and cloud interaction. In a broad sense, the wearable intelligent device includes a full-featured and large-sized device that can implement complete or partial functions without depending on a smartphone, for example, a smart watch or smart glasses, and includes a device that focuses only on a specific type of application and needs to be used together with another device such as a smartphone, for example, various smart bands and smart jewelry used for vital sign monitoring.

In addition, in embodiments of this application, the terminal device may alternatively be a terminal device in a system in the internet of things (internet of things, IoT). The IoT is an important part of future development of information technologies. A main technical feature of the IoT is to implement connection between an object and a network by using a communication technology, to build an intelligent network characterized by human-machine connection and connection between things.

In some scenarios, the terminal device may also be replaced with a client.

### 2. Access network

The access network provides a network access function for user equipment, and can use transmission tunnels of different quality based on a user level, a service requirement, and the like. An access network may be an access network that uses different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements a network access function based on a wireless communication technology may be referred to as a radio access network (radio access network, RAN). The radio access network can manage radio resources, provide an access service for a terminal device, and forward a control signal and user data between the terminal and a core network.

The radio access network may include, for example but not limited to, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a Wi-Fi system, a radio relay node, a radio backhaul node, a transmission point (transmission point, TP) or a transmission and reception point (transmission and reception point, TRP), or may be a gNB or a transmission point (TRP or TP) in a 5G (for example, NR) system, one antenna panel or a group of antenna panels (including a plurality of antenna panels) of a base station in a 5G system, or may be a network node that forms a gNB or a transmission point, for example, a baseband unit (BBU) or a distributed unit (distributed unit, DU), or a base station in a next-generation communication 6G system. A specific technology and a specific device form used for the radio access network device are not limited in embodiments of this application.

The access network may provide a service for a cell. The terminal device may communicate with the cell by using a transmission resource (for example, a frequency domain resource or a spectrum resource) allocated by the access network device.

### 3. AMF

The AMF is mainly used for mobility management, access management, and the like, for example, user location update, user registration with a network, and user switching. The AMF may be further configured to implement a function other than session management in a mobility management entity (mobility management entity, MME), for example, or access authorization (or authentication).

### 4. SMF

The SMF is mainly configured for session management, UE internet protocol (Internet Protocol, IP) address allocation and management, selection and management of user plane functions, termination of interfaces towards policy control and charging functions, downlink data notification, or the like. In embodiments of this application, the SMF is mainly responsible for session management in a mobile network, for example, session establishment, modification, and release. A specific function may include, for example, allocating an IP address to a terminal device, selecting a UPF that provides a packet forwarding function, and the like.

### 5. UPF

The UPF is a data plane gateway. The UPF may be configured for packet routing and forwarding, quality of service (quality of service, QoS) handling for user plane data, or the like. Access of subscriber data to a data network (data network, DN) can be implemented through the UPF. In embodiments of this application, the UPF may be configured to implement a function of a user plane gateway.

### 6. Data network (data network, DN)

The DN is an operator network that provides data services for subscribers, for example, an operator service network, the Internet (Internet), a third-party service network, and an IP multi-media service (IP multi-media service) network.

### 7. Network Exposure Function (network exposure function, NEF)

The NEF is configured to securely expose, to the outside, a service, a capability, and the like that are provided by 3GPP network functions. The NEF is not shown in FIG. 1.

### 8. Network repository function (network repository function, NRF)

The NRF is configured to store network function entities and description information of services provided by the network function entities, and supports service discovery, network element entity discovery, and the like. The NRF is not shown in FIG. 1.

### 9. PCF

The PCF is a unified policy framework used to govern network behavior, and provides policy rules and the like to Control Plane function network elements (such as an AMF and an SMF).

### 10. UDM

The UDM is configured for storing subscriber data, such as subscription information, authentication/authorization information, and the like.

### 11. Application function (application function, AF)

The AF is responsible for providing services to a 3GPP network, for example, influencing traffic routing and interacting with a PCF for policy control.

In the network architecture shown in FIG. 1, the network elements may communicate with each other through interfaces shown in the figure. As shown in the figure, an N1 interface is an interface between a terminal device and an AMF; an N2 interface is an interface between a RAN and the AMF, and is configured to send a non-access stratum (non-access stratum, NAS) message and the like; an N3 interface is an interface between the RAN and a UPF, and is configured to transmit user plane data and the like; an N4 interface is an interface between an SMF and the UPF, and is configured to transmit information such as tunnel identifier information of an N3 connection, data buffer indication information, and a downlink data notification message; an N5 interface is an interface between a PCF and an AF; an N6 interface is an interface between the UPF and a DN, and is configured to transmit user plane data and the like; an N7 interface is an interface between the SMF and the PCF; an N8 interface is an interface between the AMF and UDM; an N10 interface is an interface between the UDM and the SMF; and an N11 interface is an interface between the AMF and the SMF.

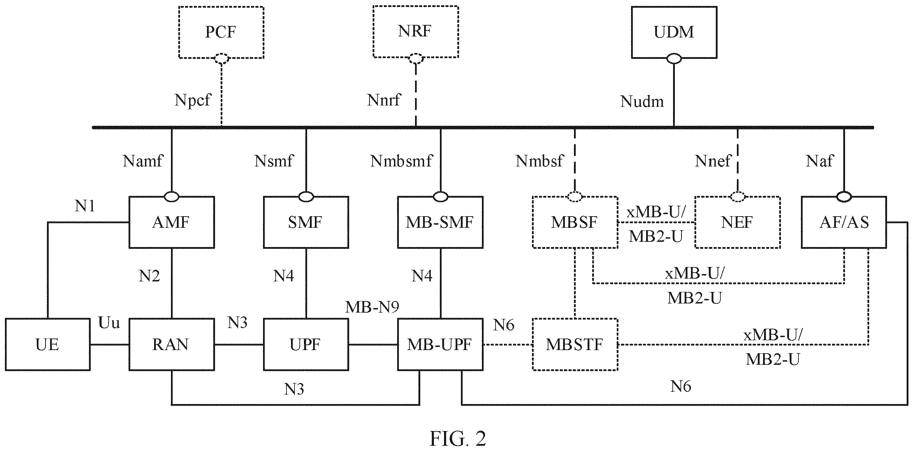

FIG. 2 is a schematic diagram of a multicast broadcast service architecture that is applicable to a method according to an embodiment of this application.

The architecture and a function of the multicast broadcast service shown in FIG. 2 are defined based on an enhanced architecture and function of a unicast network. The following briefly describes functions of each network element in FIG. 2 that are specific to the multicast broadcast service.

### 1. PCF

The PCF is mainly responsible for: QoS handling for a multicast broadcast service (multicast broadcast service, MBS) session, providing policy information for a multicast and broadcast SMF (multicast and broadcast SMF, MB-SMF), interacting with a user data repository (user data repository, UDR) to obtain QoS information, and the like. The PCF is an optional network element. The functional entity is required only when dynamic policy and charging control (policy charging control, PCC) is used.

### 2. MB-SMF

The MB-SMF is an entity supporting a broadcast feature. The MB-SMF may also have a function of a unicast SMF. Specifically, the MB-SMF is responsible for: MBS session management, including QoS control; multicast and broadcast (multicast and broadcast UPF, MB-UPF) configuration; interaction with a RAN to control broadcast flow (flow) transmission (a broadcast session specific function); interaction with an SMF concerning a protocol data unit (protocol data unit, PDU) session; interaction with the RAN to control multicast flow transmission (a multicast session specific function), and the like.

### 3. SMF

A unicast SMF needs to be enhanced, so that the SMF can support a 5G MBS. The following functions are added: discovering an MB-SMF, authorizing join for UEs, interacting with the MB-SMF to manage a multicast session context, and interacting with a RAN to establish multicast transmission resources.

### 4. MB-UPF

The MB-UPF is a data plane gateway of a 5G MBS, and is mainly responsible for: interaction with an MB-SMF for obtaining data forwarding rules; delivery of multicast data to a RAN according to a shared delivery method; and delivery of multicast data to a UPF according to an individual delivery method.

### 5. UPF

The UPF is mainly responsible for interacting with an MB-UPF for receiving multicast data transmitted according to an individual delivery method, and delivering multicast data to UEs via a PDU session according to the individual delivery method.

### 6. AMF

The AMF is mainly responsible for signaling routing (between an NG-RAN and an MB-SMF), selection of NG-RANs for broadcast, and the like.

### 7. RAN

The RAN is mainly responsible for: management of MBS QoS flows, delivery of data for UEs using point to multipoint (point to multipoint, PTM) or point to point (point to point, PTP), configuration of broadcast flow reception at an AS layer, switching between PTM and PTP, support switching between Xn and N2 of a multicast session, session signaling handling, establishment of resources for air interface broadcast and multicast, and the like.

### 8. UE

Main functions of the UE are reception of multicast data using PTM/PTP, reception of multicast/broadcast data using PTM, QoS handling, initiation of session join and session leave, and 5G MBS resource management on a terminal side.

### 9. Multicast broadcast service function (multicast broadcast service function, MBSF)

The MBSF mainly supports the following functions: service level functionality, interworking with an LTE MBS, interacting with an AF and an MB-SMF for MBS session operations, determination of transport parameters and an MBS session type, MB-SMF selection, MBSTF control, determination of an IP multicast address of a sender, and the like. The MBSF is an optional network element.

### 10. MBSTF

The MBSTF mainly supports the following functions: a media anchor for MBS data, sourcing of IP multicast, generic packet transport functionalities such as framing, multiple flows, forward error correction (forward error correction, FEC), multicast/broadcast delivery of input files as objects (objects) or object flows (object flows), and the like. The MBSTF is an optional network element.

### 11. AF

The AF mainly supports the following functions: requesting a multicast or broadcast service from the 5G core network (5G core network, 5GC) by providing service information, instructing (instructing) MBS session operation towards the 5GC, and the like.

### 12. UDM

The UDM mainly supports management of subscription for authorization for multicast sessions.

### 13. NRF

The NRF is information about a core network element. The NRF performs the following functions to support an MBS feature: management of an MB-SMF serving an MBS session, specifically including storage of an ID of the MBS session served by the MB-SMF.

### 14. NEF

The NEF performs the following functions to support an MBS: MB-SMF selection, interacting with an AF and an MB-SMF for MBS session operations, determination of transport parameters and the like, providing an interface to AFs for 5G MBS procedures including service provisioning, MBS session configuration, QoS management, and the like.

In the network architecture shown in FIG. 2, the network elements may communicate with each other through the interfaces shown in the figure. Interfaces between the network elements may be those shown in FIG. 2. Details are not described herein again.

It should be understood that the foregoing network architecture applied to embodiments of this application is merely an example network architecture described from a perspective of a conventional point-to-point architecture and a service-based architecture. A network architecture applicable to embodiments of this application is not limited thereto. Any network architecture that can implement functions of the foregoing network elements is applicable to embodiments of this application.

It should be further understood that the core network elements shown in FIG. 1 and FIG. 2 may be understood as network elements configured to implement different functions in the core network, for example, the network elements may be combined into a network slice based on a requirement. These core network elements may be independent devices, or may be integrated into a same device to implement different functions. Specific forms of the foregoing network elements are not limited in this application.

It should be further understood that the foregoing names are defined only for ease of distinguishing between different functions, and should not constitute any limitation on this application. This application does not exclude a possibility of using another name in a 5G network and another future network. For example, in a 6G network, some or all of the foregoing network elements may still use terms in 5G, or may use other names. Names of interfaces between the network elements in FIG. 1 are merely examples. In specific implementation, the interfaces may have other names. This is not specifically limited in this application. In addition, a name of a message (or signaling) transmitted between the foregoing network elements is merely an example, and does not constitute any limitation on a function of the message.

For ease of understanding embodiments of this application, the following first briefly describes terms in this application.

### 1. MBS session

An MBS session may be a multicast session (multicast session) or a broadcast session (broadcast session). An MBS session used to transmit a multicast communication service may be referred to as a multicast session. A characteristic of the session is that a group of UEs receive same content data. The multicast session may also be referred to as a groupcast session. A broadcast session is an MBS session that transmits a broadcast communication service. A characteristic of the session is that same content is distributed to a specific broadcast service area.

A plurality of terminal devices that receive data transmitted by a same MBS session may belong to one service, one application, or one group. That is, data of one MBS session may correspond to one service, one application, or one group (for example, a group in a mission critical push to talk service and a group in application of the internet of vehicles). In other words, one service, one application, or one group may correspond to one multicast session.

In actual application, the MBS session may also be replaced with a multicast session, a groupcast session, a broadcast session, and the like, which are collectively referred to as an MBS session in the following for ease of description.

### 2. MBS session transmission mode

MBS session transmission is mainly implemented in two modes, namely, a shared delivery method (shared delivery method) and an individual delivery method (individual delivery method). Data transmission of a multicast session may be performed by using the shared delivery method, or may be performed by using the individual delivery method, or may be performed by using both methods (from a perspective of the entire multicast session and an MB-UPF). A transmission method used for multicast session data is related to whether an access network device supports multicast. If the access network device supports multicast, the data of the multicast service may be transmitted by using the shared delivery method. If the access network device does not support multicast, the data of the multicast service may be transmitted by using the individual delivery method.

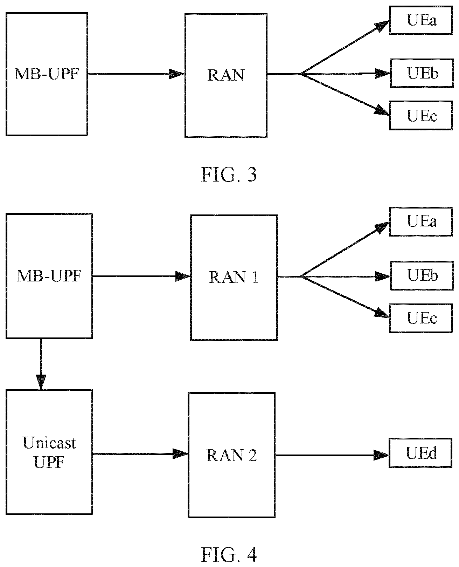

The shared delivery method refers to a transmission channel (or referred to as a transmission tunnel, for example, a tunnel based on a general packet radio service tunneling protocol (general packet radio service tunneling protocol, GTP)) from a user plane function to an access network device and a transmission channel from the access network device to an air interface side of a terminal device are shared by several users in a group. A schematic diagram in FIG. 3 is used as an example. A UPF sends a piece of data to a RAN. The RAN transmits the piece of data over an air interface. All of a UEa, a UEb, and a UEc in a group is able to receive the data.

The individual delivery method means that a transmission channel from a user plane function to an access network device and a transmission channel from the access network device to an air interface side of a terminal device are exclusive to a single user. The individual delivery method is mainly used in a scenario in which an access network device on which a UE camps does not support multicast. A schematic diagram in FIG. 4 is used as an example. When a RAN 2 on which a UEd camps does not support multicast, a previous-hop network element of data of the RAN 2 is a unicast UPF. A transmission channel from the unicast UPF to the RAN 2 and a transmission channel from the RAN 2 to an air interface side of the UEd are exclusive to the UEd. A data transmission path is MB-UPF→unicast UPF→RAN 2→UEd.

### 3. Service data transmission path

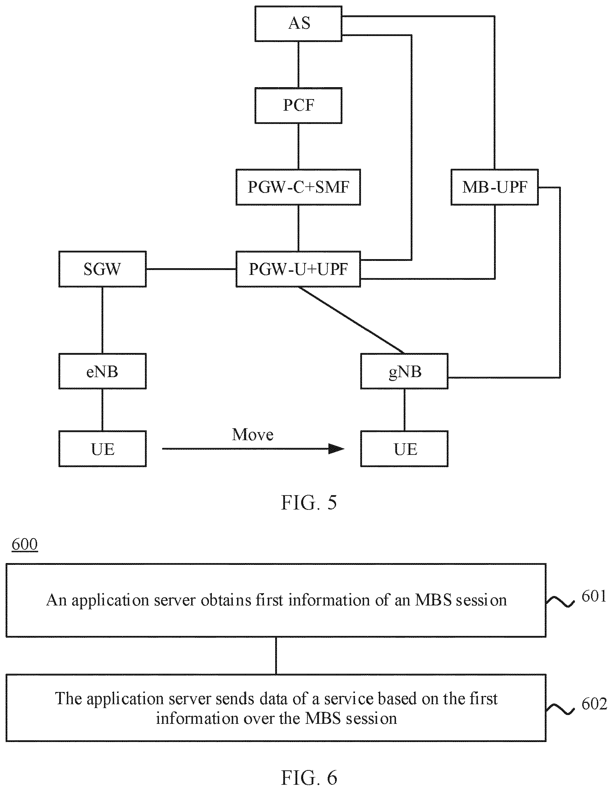

FIG. 5 is a schematic diagram of several service data transmission paths. FIG. 5 shows only key network elements in each transmission path.
Path 1: AS→PGW-U+UPF→SGW→eNB→UE
Path 2: AS→PGW-U+UPF→gNB→UE
Path 3: AS-NM-UPF-gNB-UE
Path 4: AS→MB-UPF→PGW-U+UPF→gNB→UE
Path 5: AS→MB-UPF→PGW-U+UPF→SGW→eNB→UE

The PGW-U is a user plane public data network gateway (public data network gateway, PGW). The SGW is a serving gateway (serving gateway). The path 1 is a unicast transmission path of user plane data when the UE is in a 4G system (the 4th generation system, 4GS). The path 2 is a unicast delivery (unicast delivery) path of user plane data when the UE is in a 5GS. The path 3 is a multicast delivery path of user plane data when the UE is in a 5GS. The path 4 is a multicast delivery path of user plane data when the UE is in a 5GS. The path 5 is an independent multicast delivery path of user plane data when the UE switches from a 5GS to a 4GS (data is transmitted by using a unicast session and/or a unicast bearer of the UE).

It should be noted that the path 3 may correspond to the foregoing individual delivery method, and the path 4 may correspond to the foregoing shared delivery method.

It should be further noted that only several delivery paths in this application are described herein. Actually, user plane data may be transmitted to a terminal device through more other nodes and devices.

It should be further noted that a unicast manner in this application may be the foregoing path 1 or path 2, and a multicast manner may be the foregoing path 3 to path 5.

The MBS is a service oriented to a plurality of terminals, for example, livestreaming and scheduled program playing. The MBS may be transmitted through multicast, that is, a base station simultaneously sends same content data to the plurality of terminals. Specifically, a multicast broadcast service session may be established for the plurality of terminals to transmit MBS data, and the base station may send only one copy of the MBS data. It can be learned that multicast helps improve resource utilization efficiency. However, how to use a multicast broadcast service session to transmit an MBS is not specified in current protocols.

For the foregoing problem, this application provides a service data transmission method and a communication apparatus, so that data of a service can be transmitted flexibly over an MBS session.

The following describes in detail the service data transmission method provided in embodiments of this application with reference to a plurality of accompanying drawings.

It may be understood that, for ease of understanding and description, the following describes in detail the method provided in embodiments of this application by using interaction between devices as an example. However, this should not constitute any limitation on an execution body of the method provided in this application. For example, an application server shown in the following embodiments may be replaced with a component (such as a circuit, a chip, or a chip system) configured in the application server.

A specific structure of an execution body of the method provided in embodiments in the following descriptions is not limited in embodiments of this application, provided that the execution body can execute a program that records code of the method provided in embodiments of this application, to perform the method provided in embodiments of this application.

It may be further understood that, in embodiments of this application, related descriptions of sending, by a network element A, a message, information, or data to a network element B, and receiving, by the network element B, a message, information, or data from the network element A are intended to describe a network element to which the message, the information, or the data is sent, and whether the message, the information, or the data is directly sent or indirectly sent by using another network element is not limited.

It may be further understood that, in embodiments of this application, descriptions such as "when...", "in a case of...", "in case", and "if" all mean that a device (for example, an AS) performs corresponding processing in an objective case, and are not limited to a time, and the device (for example, the AS) is not required to perform a determining action during implementation. This does not mean that there is another limitation.

FIG. 6 is a schematic flowchart of a service data transmission method 600 according to an embodiment of this application. The method 600 may be applied to the system architectures shown in FIG. 1 and FIG. 2. The method 600 includes at least a part of the following content.

Step 601: An application server obtains first information of an MBS session.

The first information includes at least one of the following: information about at least one terminal related to the MBS session, a status or an association event of the MBS session, and a connection status of a terminal that has joined the MBS session. The at least one terminal is provided with the service by the application server. The first information of the MBS session may also be understood as first information related to the MBS session.

That the at least one terminal is provided with the service by the application server may also be understood as that the at least one terminal is a terminal that receives data of the service, or the at least one terminal obtains the data of the service from the application server, or the at least one terminal is a terminal served by the service. The "service" may be understood as a service obtained from the application server by the terminal through connection interaction by the terminal with an application layer of the service.

That the at least one terminal is provided with the service by the application server may also be replaced with that the at least one terminal belongs to a group corresponding to the MBS session.

The information about the terminal related to the MBS session may also be replaced with a status of the terminal in the MBS session, a status of the terminal related to the MBS session, or the like. The information about the terminal related to the MBS session may be understood as terminal-specific information.

A type of the MBS session may be multicast, or may be broadcast.

When the type of the MBS session is multicast, for example, the information about the terminal related to the MBS session may be at least one of "join (join)", "active (active)", "leave (leave)", "inactive (inactive)", "suspend (suspend)", "switch from a first communication system to a second communication system and join", and "switch from a second communication system to a first communication system and leave". The first communication system does not support multicast, and the second communication system supports multicast. "Join", "active", "leave", "inactive", "suspend", "switch from a first communication system to a second communication system and join", and "switch from a second communication system to a first communication system and leave" may be replaced with "have joined", "have activated", "have left", "have deactivated", "have suspended", "have switched from a first communication system to a second communication system and joined", and "have switched from a second communication system to a first communication system and left"; or may be replaced with "have joined an MBS session", "have activated an MBS session", "have left an MBS session", "have deactivated an MBS session", "have suspended an MBS session", "have switched from a first communication system to a second communication system and joined an MBS session", or "have switched from a second communication system to a first communication system and left an MBS session"; or may be replaced with "The terminal has joined an MBS session", "The terminal has activated an MBS session", "The terminal has left an MBS session", "The terminal has deactivated an MBS session", "The terminal has suspended an MBS session", "The terminal has switched from a first communication system to a second communication system and has joined an MBS session", or "The terminal has switched from a second communication system to a first communication system and has left an MBS session".

The information about the terminal related to the MBS session may be understood as a change of a status of the terminal related to the MBS session, that is, change into a join state, change into an active state, change to a leave state, change into an inactive state, change into a suspend state, change into the join state after switching from the first communication system to the second communication system, change into the leave state after switching from the second communication system to the first communication system, and the like.

It should be noted that "have joined the MBS session" should be understood as "have joined the MBS session successfully, and keep in the join state", that is, indicates a current state of the terminal.

It should be further noted that, for multicast, the information about the terminal related to the MBS session may also be understood as whether the terminal is able to receive service data in the MBS session. For example, joining or activation may be understood as the terminal being able (able) or ready to receive the service data of the MBS session. For another example, leaving, suspending, or deactivation may be understood as the terminal being unable to receive the service data of the MBS session.

When the type of the MBS session is broadcast, for example, the information about the terminal related to the MBS session may be whether the terminal is able to receive data in the MBS session. For example, the terminal determines, by monitoring receiving quality of a dedicated broadcast channel, whether the service data from the application server can be received, and provides feedback to the application server.

The status or the association event of the MBS session may include at least one of the following: A terminal joins the MBS session; a terminal leaves the MBS session; and the MBS session changes into the active state.

A terminal joining the MBS session may refer to any terminal joining the MBS session, or a first terminal of the service joining the MBS session. The first terminal of the service may also be replaced with a first terminal in a group corresponding to the MBS session, or a first terminal in a group corresponding to the service.

A connection status of the terminal that has joined the MBS session may include a connected (connected) state, an idle (idle) state, and an inactive (inactive) state.

Step 602: The application server sends the data of the service based on the first information over the MBS session.

The application server may provide the service.

Optionally, the service is a multicast broadcast service, for example, a mission critical push to talk service, a mission critical video service, a mission critical data service, an internet of vehicles service, or a media service.

In some implementations, step 602 includes: The application server determines, based on the first information, that a quantity of terminals that have joined the MBS session reaches a preset value, or that a specific terminal has joined the MBS session, or that the MBS session changes into an active state; and the application server sends the data of the service over the MBS session. There may be one or more specific terminals.

For example, the application server may count, based on the information about the at least one terminal related to the MBS session included in the first information, a quantity of terminals that join the MBS session, and determine that the quantity reaches a preset value.

Specifically, the application server may set a counter. When a terminal joins the MBS session, a value of the counter increases by 1. When a terminal leaves the MBS session, the value of the counter decreases by 1. The application server may determine, based on the value of the counter, that the quantity of terminals that have joined the MBS session reaches the preset value.

For another example, the application server may determine, based on the information about the at least one terminal related to the MBS session included in the first information, that the specific terminal has joined the MBS session. Specifically, the application server may determine, based on an identifier of the terminal or a client that reports the first information, that a specified user (for example, a commander, a team leader, a staff member in a specific area, or a staff member holding a specific post) has joined the MBS session.

For another example, the application server may determine, based on the status or the association event of the MBS session included in the first information, that the status of the MBS session is the active state.

For another example, the application server may count, based on the information about the at least one terminal related to the MBS session included in the first information, a quantity of terminals that join the MBS session and that are in the connected state, and determine that the quantity does not reach a preset value. Specifically, the application server may set a counter. When a terminal joins the MBS session and is in the connected state, a value of the MBS session counter increases by 1. When a terminal turns into the idle state or the inactive state, a value of the MBS session counter decreases by 1. The application server may determine, based on the value of the counter, that the quantity reaches the preset value.

For another example, the application server may count, based on the information about the at least one terminal related to the MBS session included in the first information, a quantity of terminals activating the MBS session (the terminals have joined the MBS session), and determine that the quantity reaches a preset value. Specifically, the application server may set a counter. When a terminal activates the MBS session, a value of the counter increases by 1. When a terminal deactivates the MBS session (the terminal is still in the MBS session), the value of the counter decreases by 1. The application server may determine, based on the value of the counter, that the quantity of terminals that activate the MBS session reaches a preset value.

For another example, the application server may count, based on the information about the at least one terminal related to the MBS session included in the first information, terminals that activate the MBS session (the terminals has joined in the MBS session), and determine that a specific terminal (for example, a terminal corresponding to a specific user expected by the service, a first responder, a dispatcher, or a commander) has joined the MBS session.

Optionally, step 602 further includes: If the first terminal has joined the MBS session, the application server stops sending the data of the service to the first terminal through unicast. In other words, when the server determines that the first terminal is able to receive the data of the service over the MBS session, the application server may stop sending the same data of the service through a unicast path. This helps save processing resources and network transmission resources of the server.

The first terminal may be one or more of the at least one terminal. The connection status of the first terminal may be a connected mode, an idle mode, or an inactive mode. This is not limited.

Optionally, step 602 further includes: If a second terminal has joined the MBS session and the second terminal is in the idle state, the application server sends the data of the service to the second terminal through unicast. In other words, for a terminal in the idle state, even if the terminal has successfully joined the MBS session and the application server determines to send the data of the service over the MBS session, the application server still sends the data of the service to the second terminal through unicast, to avoid missing data of some services, namely, packet loss during switch to the connected state because the second terminal needs to switch to the connected state to receive the data of the service from a multicast session.

In some implementations, the application server may further receive a user plane join message (for example, an internet group management protocol (internet group management protocol, IGMP) join message), where the join message is used by a user plane gateway to join a multicast tree. For the application server, the join message may implicitly indicate that the first terminal of the service has joined an MBS session. In response to receiving the join message, the application server may send the data of the service over the MBS session, or the application server may determine, based on the join message and the first information, to send the data of the service over the MBS session. For example, the application server learns, based on the join message, that at least one user is able to receive service data over the MBS session, and can send the data of the service through the multicast session from this moment. However, based on a service status of the application server, the application server may further determine, based on the first information, whether a quantity of users joining the MBS session reaches a preset value or whether a specific user has joined the MBS session, and then send the data of the service to the multicast session at an appropriate time. The preset value may be an integer greater than 0.

In some implementations, the method 600 further includes: The application server obtains second information of the MBS session; and the application server stops, based on the second information, sending the data of the service over the MBS session.

The second information includes at least one of the following: the information about the at least one terminal related to the MBS session, the status or association event of the MBS session, and the connection status of the terminal that has joined the MBS session. The at least one terminal is provided with the service by the application server.

The second information is similar to the first information. For details, refer to the descriptions of the first information. A difference is that the status or the association event of the MBS session in the second information may include at least one of the following: A terminal joins the MBS session, a terminal leaves the MBS session, a last terminal of the service has left the MBS session, and the MBS session is changed to the inactive state.

The last terminal of the service may also be replaced with a last terminal in the group corresponding to the MBS session, or a last terminal in the group corresponding to the service.

That the application server stops, based on the second information, sending the data of the service over the MBS session includes: The application server determines, based on the second information, that a quantity of terminals that have joined the MBS session does not reach a preset value; a specific terminal has left the MBS session; the last terminal of the service has left the MBS session; the MBS session changes into the inactive state; a quantity of terminals that have joined the MBS session and are in a connected state does not reach a preset value; and the application server stops sending the data of the service over the MBS session. The preset value may be an integer greater than 0.

For example, the application server may count, based on the information about the at least one terminal related to the MBS session included in the second information, a quantity of terminals joining the MBS session, and determine that the quantity does not reach a preset value.

Specifically, the application server may set a counter. When a terminal joins the MBS session, a value of the counter increases by 1. When a terminal leaves the MBS session, the value of the counter decreases by 1. The application server may determine, based on the value of the counter, that the quantity of terminals joining the MBS session does not reach the preset value.

For another example, the application server may determine, based on the information about the at least one terminal related to the MBS session included in the second information, that the specific terminal has left the MBS session.

For another example, the application server may determine, based on the status or the association event of the MBS session included in the second information, that the last terminal of the service has left the MBS session.

For another example, the application server may determine, based on the status or the association event of the MBS session included in the second information, that the status of the MBS session is the inactive state.

For another example, the application server may count, based on the information about the at least one terminal related to the MBS session included in the second information, a quantity of terminals that join the MBS session and activate the MBS session, and determine that the quantity does not reach a preset value. Specifically, the application server may set a counter. When a terminal joins the MBS session and activates the MBS session, a value of the counter increases by 1. When a terminal deactivates or suspends the MBS session, a value of the counter decreases by 1. The application server may determine, based on the value of the counter, that the quantity does not reach the preset value.

For another example, the application server may count, based on the information about the at least one terminal related to the MBS session included in the second information, a quantity of terminals that join the MBS session and that are in the connected state, and determine that the quantity does not reach a preset value. Specifically, the application server may set a counter. When a terminal joins the MBS session and is in the connected state, a value of the MBS session counter increases by 1. When a terminal turns into the idle state or the inactive state, a value of the MBS session counter decreases by 1. The application server may determine, based on the value of the counter, that the quantity does not reach the preset value.

For another example, the application server may count, based on the information about the at least one terminal related to the MBS session included in the second information, terminals that activate the MBS session (the terminals has joined in the MBS session), and determine that a specific terminal (for example, a terminal corresponding to a specific user expected by the service, a first responder, a dispatcher, or a commander) has left the MBS session.

In some implementations, before the application server obtains the first information of the multicast broadcast service session, the method 600 further includes: The application server determines that data of the service is to be sent; and the application server sends seventh information to a core network device, where the seventh information is used to activate the multicast broadcast service session. In other words, when determining to send the data of the service, the application server may execute a multicast broadcast service session activation procedure, to ensure that, before the data of the service is sent, a terminal that has joined the multicast broadcast service session is in the connected state. This helps reduce a probability of packet loss.

Optionally, before the application server sends the seventh information to the core network device, the method 600 further includes: The application server obtains a status of the multicast broadcast service session and/or a connection status of a terminal that has joined the multicast broadcast service session; and the application server determines to initiate the multicast broadcast service session activation procedure when at least one of the following cases is met: The multicast broadcast service session is in the inactive state; a quantity of terminals that have joined the multicast broadcast service session and that are in the idle state and/or in the inactive state reaches a second threshold; and a quantity of terminals that have joined the multicast broadcast service session and that are in the connected state is less than a third threshold. In other words, the application server executes the session activation procedure only when determining that the MBS session is in the inactive state, and/or that the quantity of terminals that have joined the MBS session and that are in the idle mode and/or the inactive mode reaches the second threshold, and/or the quantity of terminals that have joined the MBS session and that are in the connected mode is less than the third threshold. This can avoid a situation in which the session activation procedure is still executed when the MBS session is in the active state, and can reduce signaling overheads.

In some other implementations, before the application server obtains the first information of the multicast broadcast service session, the method 600 further includes: The application server determines to send the data of the service. Step 602 may specifically include: The application server determines, based on the first information, that the multicast broadcast service session is in the inactive state, and/or the quantity of terminals that have joined the multicast broadcast service session and that are in the idle state and/or inactive state reaches the second threshold, and/or the quantity of terminals that have joined the multicast broadcast service session and that are in the connected state is less than the third threshold; the application server sends the seventh information to the core network device, where the seventh information is used to activate the multicast broadcast service session; and the application server sends the data of the service over the multicast broadcast service session when a trigger condition is met.

The trigger condition includes at least one of the following: receiving a session activation response message from a session management function serving the multicast broadcast service session, where the session activation response message indicates that the multicast broadcast service session is successfully activated or the session management function serving the multicast broadcast service session accepts a request for activating the multicast broadcast service session; receiving a notification message from the session management function serving the multicast broadcast service session, where the notification message indicates that the multicast broadcast service session changes into the active state; expiration of a first timer, where the first timer is started after the application server sends the seventh information; and an amount of received eighth information reaching a first threshold, where the eighth information is from a terminal and indicates that the terminal successfully receives the seventh information, and the seventh information is user plane data.

In some implementations, the core network device may be an MB-SMF, and the seventh information is a session activation request message; or the core network device is an MB-UPF, and the seventh information is user plane data, where the user plane data may be data generated by an application server and sent to a terminal or a client based on an application layer protocol. The user plane data is at least one copy of the data of the service, and the copy of the data of the service is the same as the data of the service. Alternatively, the user plane data is a subset of the data of the service, that is, the seventh information may be a part of the data of the service, for example, one or more data packets of the data of the service. Alternatively, the user plane data is control plane signaling information related to the data of the service, for example, application-layer user plane control signaling. Alternatively, the user plane data is redundant data or the like.

In this application, the application server may obtain first information in different implementations. The following separately provides detailed descriptions.

In some implementations, step 601 includes: The application server receives the first information from the core network device.

Specifically, the application server may request for or subscribe to the first information from the core network device.

More specifically, the application server may send a first request message or a subscription message to the core network device, where the first request message is used to request for the first information, the subscription message is used for subscription to the first information, and the first request message or the subscription message includes an MBS session identity.

Optionally, when the application server requests for or subscribes to terminal-specific information (for example, the information about the terminal related to the MBS session or the connection status of the terminal) from the core network device, the first request message or the subscription message further includes at least one of an identifier of at least one terminal, an identifier (usually an external group identifier) of a group corresponding to the MBS session, an application identifier (application id), a service identifier (service id), a data network name (data network name, DNN), or single network slice selection assistance information (single network slice selection assistance information, S-NSSAI), so that the core network device determines terminals with first information requested for or subscribed to by the application server.

Optionally, the first request message or the subscription message may further include a notification endpoint address.

The core network device may be UDM, an MB-SMF (that is, a multicast-serving SMF), an SMF (that is, a unicast-serving SMF), an AMF, or the like.

In some other implementations, step 601 includes: The application server receives the first information from the at least one terminal, where the at least one terminal is provided with the service by the application server.

In other words, the terminal may report the first information to the application server, and the terminal may report the first information to the application server with a multicast session status report message.

Optionally, before step 601, the method 600 further includes: The application server sends a first message to the terminal of the service, where the first message is used to trigger report of the first information.

The first message may be a service announcement (service announcement) message.

Optionally, the first message includes a condition for triggering report of the first information.

For example, the condition for triggering report of the first information may be timeout or expiration of a report control timer.

For another example, the condition for triggering report of the first information may be occurrence of a specific event. For example, report is triggered by a status change of a UE related to the MBS session. For another example, report is triggered when the UE detects that broadcast session receiving quality drops to a preset threshold 1, or that the receiving quality reaches a preset threshold 2, where the preset threshold 2 is greater than or equal to the preset threshold 1. For another example, report is triggered by inter-system switching of the UE. For another example, report is triggered by radio access technology (radio access technology, RAT) switching of the UE. For another example, report is triggered when the UE joins the MBS session after inter-system switching.

The application server may further indicate, to the at least one terminal, that the type of the MBS session is multicast, so that the terminal reports the first information corresponding to multicast. For descriptions of multicast and the first information, refer to the foregoing descriptions. The at least one terminal has an application server that provides the service. The at least one terminal may belong to a same group.

In a possible implementation, the application server may send the foregoing indication with the first message.

For example, a type or name of the first message may further indicate that the type of the MBS session is multicast.

For another example, the first message includes fourth information, where the fourth information indicates that the type of the MBS session is multicast.

Optionally, the first message carries the fourth information by using a format or type of the MBS session identity or a session type parameter.

In another possible implementation, the application server sends third information to the terminal of the service, where the third information indicates that the type of the MBS session is multicast. In other words, the application server may indicate the type of the MBS session to the at least one terminal by using a separate message or separate information.

In some implementations, the method 600 further includes: The application server sends fifth information to the terminal of the service, where the fifth information includes a join mode of the MBS session.

Optionally, when the join mode of the MBS session includes at least two join modes, the fifth information further includes priorities of the at least two join modes.

In some implementations, before the application server sends the fifth information to the terminal of the service, the method further includes: The application server obtains sixth information, where the sixth information includes a join mode supported by the terminal of the service; and the application server determines the join mode of the MBS session based on the join mode supported by the terminal of the service.

Optionally, the join mode of the MBS session includes at least one of the following: a user plane mode, a control plane mode, or both the user plane mode and the control plane mode.

In embodiment described above, the application server may start or stop sending, over the MBS session, the data of the service based on the information related to the MBS session (for example, the first information and the second information). Further, the application server may further stop or start sending the data of the service through unicast. In this way, service continuity is ensured and network transmission resources are saved.

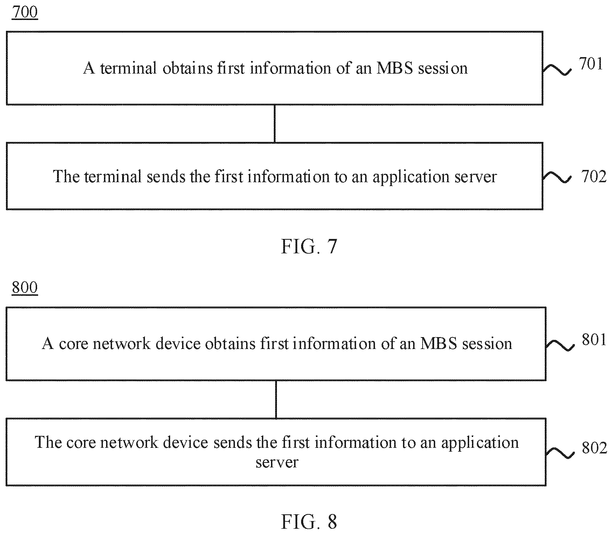

FIG. 7 is a schematic flowchart of a service data transmission method 700 according to an embodiment of this application. The method 700 may be applied to the system architectures shown in FIG. 1 and FIG. 2. The method 700 includes at least a part of the following content.

Step 701: A terminal obtains first information of an MBS session.

The first information may be information about the terminal related to the MBS session. For specific descriptions, refer to step 601.

That a terminal obtains first information of an MBS session may be replaced with that a terminal determines first information of an MBS session.

After successfully joining the MBS session, activating the MBS session, leaving the MBS session, deactivating the MBS session, suspending the MBS session, switching from a first communication system to a second communication system and joining the MBS session, or switching from a second communication system to a first communication system and leaving the MBS session, the terminal may determine that the information about the terminal related to the MBS session is that the terminal has joined the MBS session, the terminal has activated the MBS session, the terminal has left the MBS session, the terminal has deactivated the MBS session, the terminal has suspended the MBS session, or the terminal has switched from the first communication system to the second communication system and joined the MBS session, or the terminal has switched from the second communication system to the first communication system and left the MBS session.

That the terminal successfully joins the MBS session may also be understood as that the MBS session changes into or remains in an active state. Successful joining by a first terminal may be understood as an implicit indication that the MBS session changes into the active state.

Step 702: The terminal sends the first information to an application server.

In some implementations, the method 700 further includes: The terminal receives a first message from the application server. The first message is used to trigger report of the first information. Step 702 includes: The terminal sends the first information to the application server based on the first message.

Optionally, the first message includes a condition for triggering report of the first information.

For example, the condition for triggering report of the first information may be timeout or expiration of a report control timer. In other words, the terminal may send the first information to the application server when the timer expires or times out.

For another example, the condition for triggering report of the first information may be occurrence of a specific event. In other words, the terminal may send the first information to the application server when a specific event occurs. For example, report is triggered by a status change of a UE related to the MBS session (for example, a change into "join", "active", "leave", "inactive", or "suspend"). For another example, report is triggered when the UE detects that broadcast session receiving quality drops to a preset threshold 1, or that the receiving quality reaches a preset threshold 2, where the preset threshold 2 is greater than or equal to the preset threshold 1. For another example, report is triggered by inter-system switching of the UE. For another example, report is triggered by RAT switching of the UE. For another example, report is triggered when the UE joins a multicast session after inter-system switching.

In some other implementations, step 702 includes: The terminal sends the first information to the application server after detecting occurrence of the foregoing specific event. In other words, sending, by the terminal, the first information may not depend on triggering of the first message.

Optionally, before step 702, the method 700 further includes: The terminal determines that a type of the MBS session is multicast.

In some implementations, the terminal may determine, based on the first message, that a type of the MBS session is multicast.

In an example, the terminal may determine, based on a type or a name of the first message, that the type of the MBS session is multicast. For example, when the first message is a multicast service announcement (multicast service announcement) message, the terminal may determine that the type of the MBS session is multicast, that is, a name of the message indicates that the type of the MBS session is multicast. In this case, the MBS session type parameter does not need to be additionally carried.

In another example, the terminal determines, based on fourth information included in the first message, that the type of the MBS session is multicast, where the fourth information indicates that the type of the MBS session is multicast. Optionally, the first message may carry the fourth information with a format or type of an MBS session identity or a session type parameter. For example, when the MBS session identity is a source-specific multicast address, the terminal can determine that the type of the MBS session is multicast. For another example, the MBS session identity is formatted, and some fields in the identity indicate the multicast session type.

In some other implementations, the method 700 further includes: The terminal receives third information from the application server, where the third information indicates that the type of the MBS session is multicast; and that the terminal determines that a type of the MBS session is multicast includes: The terminal determines, based on the third information, that the type of the MBS session is multicast. In other words, the application server may indicate the type of the MBS session to the terminal by using a separate message or separate information.

Optionally, the method 700 further includes: The terminal receives fifth information from the application server, where the fifth information includes a join mode in which the terminal joins the MBS session. In this way, the terminal may join the MBS session based on the fifth information.

Optionally, when the join mode of the MBS session includes at least two join modes, the fifth information further includes priorities of the at least two join modes.

Optionally, before the terminal receives the fifth information from the application server, the method further includes: The terminal sends sixth information to the application server, where the sixth information includes a join mode supported by the terminal; and the application server determines the join mode of the MBS session based on a join mode supported by the terminal.

Optionally, the join mode of the MBS session includes at least one of the following: a user plane mode, a control plane mode, or both the user plane mode and the control plane mode.

If the application server does not specify a join mode for the terminal, the terminal may select a join mode based on local configuration or an operator policy. For example, the terminal may use either of a user plane mode or a control plane mode, or may use both the user plane mode and the control plane mode.

It should be noted that, for a terminal, first information reported by the terminal is information about the current terminal related to an MBS session. Therefore, the first information in the method 700 may actually correspond to the first information and the second information in the method 600. For example, first information at a first moment corresponds to the first information in the method 600, and first information at a second moment corresponds to the second information in the method 600.

In some implementations, the method 700 further includes: The terminal receives seventh information from the application server, where the seventh information is user plane data; and the terminal sends eighth information to the application server, where the eighth information indicates that the seventh information is successfully received. In other words, the application server may send the user plane data to the terminal. After receiving the user plane data, the terminal may feed back to the application server that the terminal correctly receives the user plane data, so that the application server determines, based on the feedback of the terminal, whether data of a service can be sent to the terminal. In this way, before the data of the service is sent, it can be ensured that the terminal that has joined the multicast broadcast service session is in a connected state. This helps reduce a probability of packet loss.

The user plane data is at least one copy of the data of the service, and the copy of the data of the service is the same as the data of the service. Alternatively, the user plane data is a subset of the data of the service, that is, the seventh information may be a part of the data of the service, for example, one or more data packets of the data of the service. Alternatively, the user plane data is control plane signaling information related to the data of the service, for example, application-layer user plane control signaling. Alternatively, the user plane data is redundant data or the like.

Optionally, the method 700 further includes: The terminal processes the seventh information. In a possible implementation, if the seventh information is a copy of the service data, the terminal may choose to directly discard the information. Alternatively, the terminal may process only the copy, and may not process the service data when receiving the service data again.

FIG. 8 is a schematic flowchart of a service data transmission method 800 according to an embodiment of this application. The method 800 may be applied to the system architectures shown in FIG. 1 and FIG. 2. The method 800 includes at least a part of the following content.

Step 801: A core network device obtains first information of an MBS session.

The first information may include at least one of the following: information about at least one terminal related to the MBS session, a status or an association event of the MBS session, and a connection status of a terminal that joins the MBS session. The at least one terminal is provided with the service by the application server. For specific descriptions, refer to step 601. Details are not described herein again.

The core network device may be UDM, an MB-SMF, an SMF, or an AMF.

Optionally, when the core network device is UDM or a multicast-serving SMF, step 801 includes:
The core network device obtains the first information from a terminal-serving SMF (an SMF corresponding to a PDU session associated with the MBS session) or an AMF.

Step 802: The core network device sends the first information to an application server.

Optionally, the method 800 further includes: The core network device obtains second information of the MBS session; and the core network device sends the second information to the application server.

Optionally, the second information includes at least one of the following: the information about the at least one terminal related to the MBS session, the status or association event of the MBS session, and the connection status of the terminal that has joined the MBS session. The at least one terminal is provided with the service by the application server. For specific descriptions, refer to step 601. Details are not described herein again.

Optionally, before step 801, the method 800 further includes: The core network device receives a first request message or a subscription message from the application server, where the first request message is used to request for the first information, the subscription message is used for subscription to the first information, and the first request message or the subscription message includes an MBS session identity.

When the application server requests for or subscribes to terminal-specific information (for example, the information about the terminal related to the MBS session or the connection status of the terminal) from the core network device, the first request message or the subscription message further includes an identifier of at least one terminal, or at least one of an identifier (usually an external group identifier) of a group corresponding to the MBS session, an application identifier (application id), a service identifier (service id), a data network name (data network name, DNN), and single network slice selection assistance information (single network slice selection assistance information, S-NSSAI), so that the core network device determines terminals with first information requested for or subscribed to by the application server.

Optionally, the first request message or the subscription message may further include a notification endpoint address.

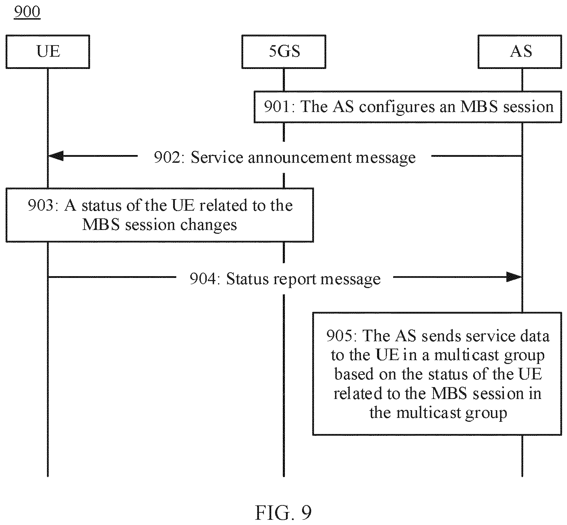

For ease of understanding, the following describes embodiments of this application in more detail with reference to FIG. 9 to FIG. 16. In FIG. 9 to FIG. 15, a service announcement message may correspond to the foregoing first message, and first information and second information may be information carried in a status report message. It should be further noted that a status of a UE related to an MBS session in FIG. 9 to FIG. 16 may be described as information about the UE related to the MBS session, and a status of the MBS session may also be described as a status or an association event of the MBS session. The following uses the status of the UE related to the MBS session and the status of the MBS session.

FIG. 9 is a schematic flowchart of a service data transmission method 900 according to an embodiment of this application. The method 900 may be applied to the system architectures shown in FIG. 1 and FIG. 2. The method 900 includes at least a part of the following content.

Step 901: An AS configures an MBS session.

A procedure in which the AS configures the MBS session is used by the AS to start the MBS session.

Optionally, the MBS session may be a multicast session (multicast session).

In an implementation, the AS may configure the MBS session to a 5GC according to a procedure defined in the existing TS23.247. In the procedure in which the AS configures the MBS session, the AS may obtain a temporary multicast group identifier (temporary multicast group identifier, TMGI) from the 5GC. Specifically, the MB-SMF may allocate the TMGI, and send the TMGI to the AS by using an NEF or an MBSF. In this procedure, the AS may further provide the 5GC with a group ID (group ID), a QoS requirement, a previously obtained TMGI, UE authorization information, service area (service area) information, and the like. For details about the configuration procedure, refer to the existing descriptions.

The UE authorization information may include a generic public subscription identifier (generic public subscription identifier, PGSI), a UE identifier (identifier, ID), an external group identifier, or the like.

Step 902: The AS sends a service announcement message to the UE.

The service announcement message is used to notify the UE of configuration information of the MBS session. The configuration information of the MBS session may include at least one of the following: an MBS session ID and potential other information. The MBS session ID may include a TMGI and/or source-specific multicast address (source-specific multicast address), and the potential other information may include an MBS service area, MBS session description information, and the like.

Optionally, the service announcement message may further include MBS session report configuration information (MBS session report configuration information), and the MBS session report configuration information may indicate whether a status of the UE related to the MBS session identified by the MBS session ID needs to be reported. For multicast, the status of the UE related to the MBS session may be "join (join)", "active (activate)", "leave (leave)", "suspend (suspend)", "inactive (inactivate)", or the like. For broadcast, the status of the UE related to the MBS session may be whether the UE is able to receive data in a broadcast session.

It should be noted that, for multicast, the status of the UE related to the MBS session may also be understood as whether the UE is able to receive service data of a multicast session. For example, joining or activation may be understood as the UE being able or ready to receive the service data of the multicast session. For another example, leaving, suspending, or deactivation may be understood as the UE being unable to receive the service data of the multicast session.

Optionally, the MBS session report configuration information may further include a report trigger, and the trigger indicates a condition for reporting the status related to the MBS session by the UE.

In some implementations, the trigger may indicate periodic report.

In some other implementations, the trigger may indicate report that is performed when a specific event occurs. For example, report is triggered by a status change of the UE related to the MBS session. For another example, report is triggered when the UE detects that broadcast session receiving quality drops to a preset threshold 1, or that the receiving quality reaches a preset threshold 2, where the preset threshold 2 is greater than or equal to the preset threshold 1. For another example, report is triggered by inter-system switching of the UE. For another example, report is triggered by RAT switching of the UE.

The status change of the UE related to the MBS session may be that the UE joins, leaves, suspends, deactivates, or activates the MBS session. Inter-system switching of the UE may include move from an EPS to a 5GC by the UE, move from the 5GC to the EPS by the UE, and the like.

Optionally, the service announcement message may further include join mode (join mode) indication information, and the join mode indication information indicates a join mode in which the UE joins the MBS session.

In some implementations, the join mode indication information may indicate that only a user plane mode is used (that is, internet group management protocol (internet group management protocol, IGMP) join), only a control plane mode (that is, NAS join) is used, or both the user plane mode and the control plane mode are used (that is, the UE can initiate either IGMP join or NAS join).

In some other implementations, the join mode indication information may also include a priority list. For example, the user plane mode is prioritized, and the control plane mode has a lower priority than the user plane mode.

Optionally, in some implementations, before sending the service announcement message, the AS may obtain UE capability information about joining the MBS session, where the capability information indicates a join mode supported by the UE. Further, the AS may determine the join mode indication information based on the join mode supported by the UE. For example, if the AS determines, based on the capability information, that the UE supports the user plane mode and the control plane mode, the AS may select one or two of the join modes, and may further specify a priority of each mode when selecting the two join modes.

A manner of obtaining the capability information by the AS is not limited in this application. For example, the AS may obtain the capability information in a registration process of the UE or in another interaction process with the UE. For another example, the AS may obtain the capability information from device configuration information of the UE.

Optionally, the service announcement message may further indicate a type (an MBS session type) of the MBS session identified by the MBS session ID. The type of the MBS session may include multicast and broadcast.

In some implementations, the type of the MBS session may be indicated by a name or type of the service announcement message. For example, when the service announcement message is a multicast service announcement (multicast service announcement) message, that is, a name of the message indicates that the type of the MBS session is multicast. In this case, the MBS session type parameter does not need to be additionally carried.

In some other implementations, the service announcement message may include an MBS session type parameter that indicates the MBS session type. For example, the service announcement message carries the MBS session type parameter indicating the MBS session type. For another example, if the service announcement message includes both a broadcast TMGI and a multicast TMGI as the MBS session ID, the service announcement message may carry MBS session type parameters respectively corresponding to the two TMGIs.

In some other implementations, a format or a type of the MBS session ID may indicate the type of the MBS session.

For example, the MBS session ID is a TMGI. The TMGI may be a formatted identifier, and the identifier may include an MBS session type. Table 1 shows a possible TMGI format.

**Table 1**

| TMGI | | |
|---|---|---|
| Session type: 1 bit (bit) | Join mode: 2 bits | ID: 29 bits |

As shown in Table 1, the session type is 1 bit. For example, 0 indicates multicast, and 1 indicates broadcast. The join mode is 2 bits. For example, 00 indicates the control plane mode (that is, NAS join), 01 indicates the user plane mode (that is, IGMP join), 10 indicates the control plane mode and the user plane mode, and 11 indicates that neither mode is applicable. The remaining 29 bits may be used to indicate an actual TMGI.

For another example, when the MBS session ID is a source-specific multicast address, it indicates that the type of the MBS session is multicast.

It should be noted that the AS may send the service announcement message to one or more terminals. If the AS sends the service announcement message to a plurality of terminals, operations performed by the plurality of terminals are similar. Therefore, only one terminal is used as an example for description in this application.

Step 903: The status of the UE related to the MBS session changes.

In an example, a change in the status of the UE related to the MBS session may be joining, by the UE based on the service announcement message, a multicast session corresponding to the MBS session ID after receiving the service announcement message.

In some implementations, the UE may use a UE join procedure in existing TS23.247.

Optionally, if the service announcement message includes a join mode, the UE joins the MBS session in a manner indicated by the join mode. If the service announcement message does not specify a join mode, the UE may select a join mode based on local configuration or an operator policy. For example, the UE may use either of the user plane mode or the control plane mode, or may use both the user plane mode and the control plane mode.

In another example, the change in the status of the UE related to the MBS session may be activating the MBS session in an inactive state by the UE.

In another example, the change in the status of the UE related to the MBS session may be leaving, deactivating, or suspending the MBS session by the UE. For example, after joining the MBS session for a period of time, the UE cannot access the MBS session due to various reasons, or the UE is no longer interested in a service corresponding to the MBS session, the UE may leave, deactivate, or suspend the MBS session.

Step 904: The UE sends a status report message to the AS.

The status report message is used to report the status of the UE related to the MBS session.

In some implementations, when the UE detects that the event in step 903 occurs or a periodic timer used for report control expires, the UE sends the status report message to the AS.

In some other implementations, the UE may send the status report message to the AS when determining that a type of the MBS session is multicast and detecting that the event in step 903 occurs or the periodic timer used for report control expires.

In some other implementations, when the service announcement message includes the MBS session report configuration information, the UE may send the status report message to the AS based on the MBS session report configuration information. If the MBS session report configuration information in the foregoing service announcement message includes a report trigger, the UE sends the status report message to the AS when a condition for reporting the status related to the MBS session is met.

The status report message may include a UE identifier or a client identifier, an MBS session ID, and MBS session status indication information. The UE identifier may be a GPSI, a UE IP address, or the like. The client identifier may be a user ID (user ID)/client ID (client ID) of an application layer client. The MBS session status indication information indicates a status of a UE related to a multicast session corresponding to the MBS session ID.

When different events occur on the UE, states of the UE related to the MBS session are also different. Details may be as follows.

If the UE initially joins or activates the MBS session, the status that is reported by the UE related to the MBS session may be a state in which the UE joins or activates the MBS session, or may be a state in which the UE supports or is able to receive a service of the multicast session corresponding to the MBS session ID. The UE joining or activating the MBS session may be interpreted as the UE supporting or being able to receive the service of the multicast session corresponding to the MBS session ID.

If the UE leaves, suspends, or deactivates the MBS session, the status that is reported by the UE related to the MBS session may be that the UE leaves, suspends, or deactivates the MBS session, or may be that the UE does not support or is unable to receive the service of the multicast session corresponding to the MBS session ID. The UE leaving, suspending, or deactivating the MBS session may be interpreted as the UE not supporting or being unable to receive the service of the multicast session corresponding to the MBS session ID.

It should be noted that step 904 may be separately performed by a plurality of UEs. A time and a sequence of performing step 904 by the plurality of UEs are not limited in this application.

It should be further noted that step 903 is an optional step, that is, if the status of the UE related to the MBS session does not change, step 904 and step 905 may also be performed. For example, the UE is configured to periodically send the status report message. Whether the status of the UE related to the MBS session changes or not, the LTE sends the status report message to report a current status related to the MBS session to the AS when the timer expires.

It should be further noted that the foregoing status report message is applicable only to multicast status report, or is applicable to both multicast status report and broadcast status report. To be specific, the status report message may be used to report only the status of the UE related to the MBS session; the status report message may be used to report the status of the UE related to the MBS session when the type of the MBS session is multicast; and/or the status report message is used to report a receiving status of a broadcast session when the type of the MBS session is broadcast.

Step 905: The AS sends service data to the UE in a group based on the status of the UE related to the MBS session in the group.

In some implementations, the AS may determine, based on a status report message sent by at least one UE, a status of the UE related to the MBS session in a group corresponding to the MBS session. Further, the AS determines, based on the status of the UE related to the MBS session in the group, to send service data to the UE in the group.

In an example, if the AS determines that at least N UEs join the MBS session, and/or the AS determines that one or more specific UEs join the MBS session, the AS transmits the service data over the MBS session, where N is an integer greater than 0. That the AS transmits the service data over the MBS session may alternatively be described as that the AS sends the service data to an MB-UPF, or that the AS transmits the service data via a multicast path, or the like. Optionally, if the status of the UE related to the MBS session is a state in which the UE joins the session or a state in which the UE activates the session, the AS may further stops sending the service data to the UE via a unicast path of the UE, that is, the AS stops sending the service data to a PSA UPF of the UE.

In another example, the AS stops transmitting the service data over the MBS session when the AS determines that a last user of the group leaves the MBS session, or the AS determines that one or more specific users leave the MBS session, or the AS determines that a quantity of UEs in the MBS session is less than a preset threshold. Optionally, the AS may send the service data on the unicast path corresponding to the UE in the group.

The multicast path herein may include the path 3 and the path 4 shown in FIG. 5, and the unicast path may include the path 2 shown in FIG. 5.

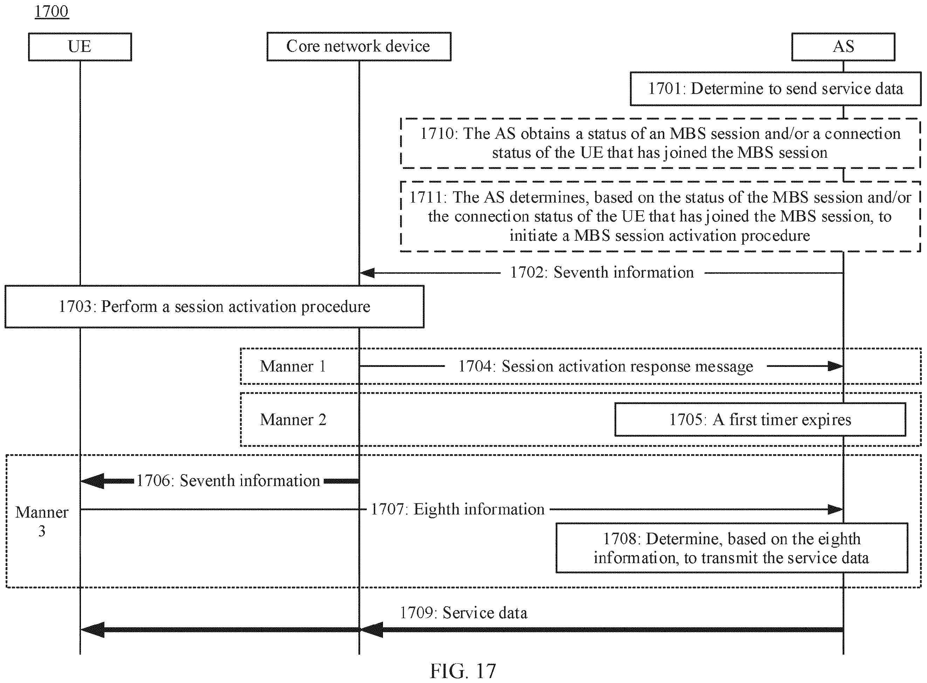

In some implementations, the method 900 may further include: The application server determines that the service data is to be sent; and the application server executes an MBS session activation procedure, which are not shown in the figure. This implementation is described below in detail with reference to FIG. 17 to FIG. 19B.

In this way, by using the method shown in FIG. 9, the AS can flexibly control when to send/stop sending the service data to the MB-UPF. Further, for a specific UE, the AS may control when to stop/restart service data transmission on a unicast path. This can save network transmission resources while multicast service continuity is ensured.

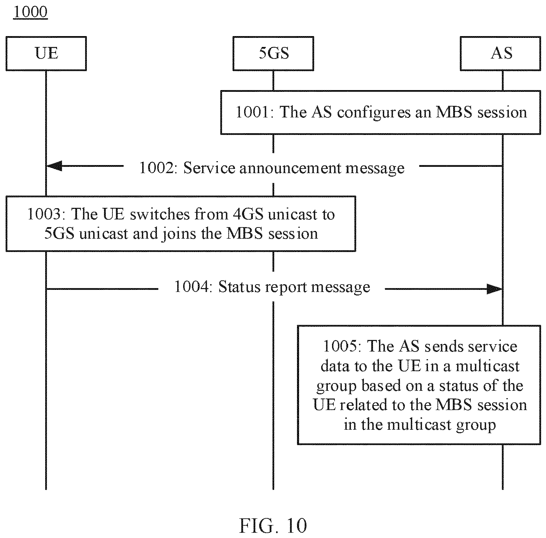

FIG. 10 is a schematic flowchart of a service data transmission method 1000 according to an embodiment of this application.

As a UE moves, inter-system switching may occur on the UE. For example, as shown in FIG. 5, when the UE switches from the 5GS to the 4GS, user plane data delivery method is switched from the shared delivery method for multicast to the individual delivery method (that is, from the path 4 to the path 1). Then, the gNB in the 5GS is switched to the eNB in the 4GS. When the UE switches from the 5GS to the 4GS, the user plane path is the path 5, that is, AS→MB-UPF→PGW-U→SGW→eNB→UE. For another example, when the UE is in the 4GS, the user plane path may be the path 5, that is, AS→MB-UPF→PGW-U→SGW→eNB→UE. Inter-system switching of the UE from the 4GS to the 5GS is as follows: The UE joins an MBS session during or after switching, and the user plane path is switched to the path 3 or the path 4.

After inter-system switching of the UE, the AS may not know that the UE has switched. As a result, the AS still sends service data to a user plane network element to which the service data is sent before switching. For example, after the UE switches from the 4GS to the 5GS, the AS does not know that the UE enters the 5GS, and therefore, the AS still sends the data to the PGW-U node. In this case, the UE may not receive the service data sent by the AS, which causes waste of network resources.

For the foregoing scenario, this application provides a method 1000 in FIG. 8. The method 1000 may be applied to the system architectures shown in FIG. 1 and FIG. 2. Different from that in FIG. 7, in the method shown in FIG. 8, a status of the UE related to the MBS session may be "join", "activate", "leave", "suspend", "deactivate", "switch from a 5GS to a 4GS", " switch from a 4GS to a 5GS and join an MBS session", or the like. States related to inter-system switching are added. The UE may send a status report message to the AS when it is detected that the UE joins the MBS session, the UE activates the MBS session, the UE leaves the MBS session, the UE suspends the MBS session, the UE deactivates the MBS session, the UE switches from the 5GS to the 4GS, and the UE switches from the 4GS to the 5GS and joins an MBS session.

In the example in FIG. 10, the UE switches from 4GS unicast to 5GS unicast and joins the MBS session. In this case, the method 1000 includes at least a part of the following content.

Step 1001: An AS configures an MBS session.

Step 1002: The AS sends a service announcement message to a UE.

Step 1001 and step 1002 are similar to step 901 and step 902. Reference may be made to descriptions of step 901 and step 902.

Step 1003: The UE switches from 4GS unicast to 5GS unicast and joins the MBS session.

Step 1004: The UE sends a status report message to the AS.

The status report message sent by the UE to the AS indicates that a status of the UE related to the MBS session is a state in which the UE switches from 4GS unicast to 5GS unicast and joins the MBS session.

Step 1005: The AS sends service data to the UE in a group based on the status of the UE related to the MBS session in the group. Different from step 905, if it is determined to transmit the service data over the MBS session, for the UE in the reported state in which the UE switches from 4GS unicast to 5GS unicast and joins the MBS session, a unicast path stopped by the AS is the path 1 in FIG. 5.

For specific implementations of step 1003 to step 1005, refer to step 903 to step 905. Details are not described herein again.

In some implementations, the method 1000 may further include: The application server determines that the service data is to be sent; and the application server executes an MBS session activation procedure, which are not shown in the figure. This implementation is described below in detail with reference to FIG. 17 to FIG. 19B.

In this way, by using the method shown in FIG. 10, when learning a status of the MBS session, the AS can learn of whether inter-system switching of the LTE occurs and flexibly control when to send/stop sending the service data to an MB-UPF. Further, for a specific UE, the AS may control when to stop/restart service data transmission on a unicast path. This can save network transmission resources while multicast service continuity is ensured.

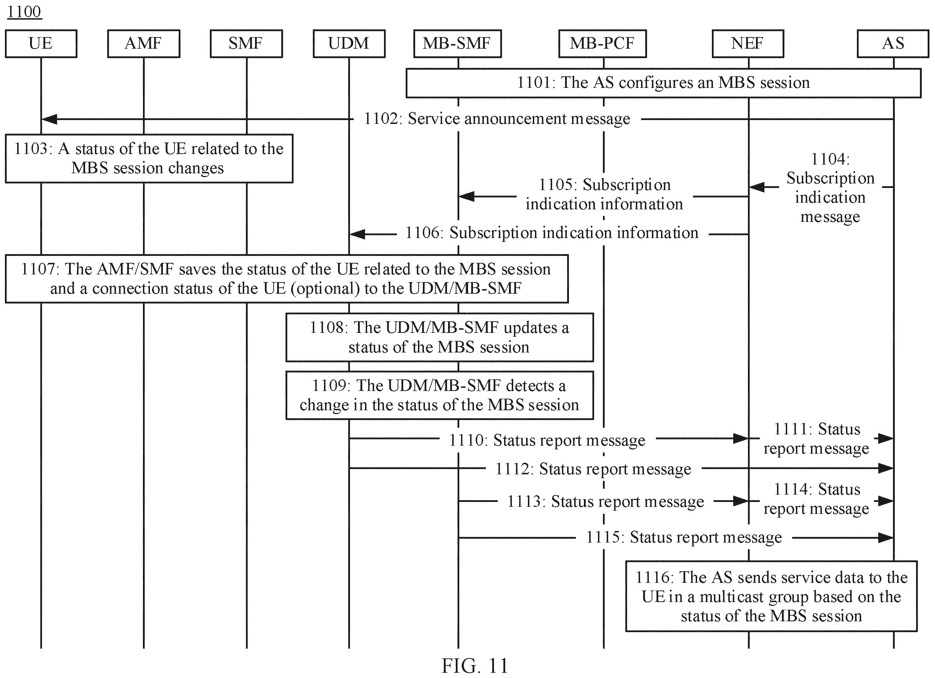

FIG. 11 is a schematic flowchart of a service data transmission method 1100 according to an embodiment of this application. The method 1100 may be applied to the system architectures shown in FIG. 1 and FIG. 2. The method 1100 includes at least a part of the following content.

Step 1101: An AS configures an MBS session.

Step 1101 is similar to step 901. Different from 901, optionally, the AS may further send subscription indication information to a 5GC in a process of configuring the MBS session. The subscription indication information is used for subscription to information related to a status of the MBS session.

The status of the MBS session may include: A first UE joins the MBS session, a new UE joins the MBS session, a UE leaves the MBS session, a last user leaves the MBS session, the MBS session changes into an inactive state, the MBS session changes into an active state, and the like.

Optionally, the subscription indication information may be further used for subscription to a connection status of the UE that joins the MBS session. The connection status of the UE may include an idle (idle) state, an inactive (inactive) state, a connected (connected) state, and the like.

Optionally, the subscription indication information may include identifiers of UEs in a group and/or an identifier (for example, an external group identifier (external group ID)) of a group corresponding to the MBS session, an MBS session identity, and a notification endpoint (NOTI endpoint) address, so that the 5GC can learn UEs with foregoing information subscribed by the AS.

Step 1102: The AS sends a service announcement message to a UE.

Step 1103: A status of the UE related to the MBS session changes.

Step 1102 and step 1103 are similar to step 902 and step 903. Reference may be made to descriptions of step 902 and step 903. Details are not described herein again.

In the method 1100, the AS may subscribe to information related to the MBS session from UDM and/or an MB-SMF. Specifically, the information related to the MBS session may be subscribed to from the MB-SMF by implementing step 1104 and step 1105, and the information related to the MBS session may be subscribed to from the UDM by implementing step 1104 to step 1106.

Step 1104: The AS sends subscription indication information to an NEF.

Step 1105: The NEF sends the subscription indication information to an MB-SMF.

In a possible implementation, the NEF may send the subscription indication information to the MB-SMF based on the MBS session ID or an address of the MB-SMF discovered from an NRF.

Step 1106: The NEF sends the subscription indication information to the UDM.

For related descriptions of the subscription indication information in step 1104 to step 1106, refer to the descriptions in step 1101. Details are not described herein again. In a possible implementation, the AS sends the subscription indication information to the NEF by using a subscription request (multicast session status subscription) message, and the NEF sends the subscription indication information to the UDM and/or the MB-SMF by using the subscription request message.

It should be noted that, if the AS subscribes to the information related to the status of the MBS session from the 5GC in step 1101, step 1104 to step 1106 may not be performed.

Step 1107: When the SMF or an AMF detects that the status of the UE related to the MBS session changes, the SMF or the AMF saves the status of the UE related to the MBS session to the MB-SMF or the UDM.

Optionally, the SMF or the AMF may further save, to the MB-SMF or the UDM, the connection status of the UE that joins the MBS session.

A manner in which the AMF or the SMF detects the status of the UE related to the MBS session is not specifically limited in this application. For example, the AMF or the SMF may learn the status of the UE related to the MBS session by detecting activation and release of an N3 channel.

In a possible implementation, the SMF or the AMF sends a multicast session create (multicast session create) message, a multicast session update (multicast session update) message, or a multicast session report (multicast session report) message to the MB-SMF or the UDM. The message may include an MBS session ID, a UE identifier, and the status of the UE related to the MBS session. Optionally, the message may further include the connection status of the UE.

Step 1108: The UDM or the MB-SMF updates the status of the MBS session.

Updating the status of the MBS session by the UDM or the MB-SMF may also be understood as updating a context of the MBS session.

In some implementations, the status of the MBS session may be in the following form:
MBS session ID: XXX;
Status: active;
joined UE: UE1 (idle), UE2 (connected), UE3 (idle).

Step 1109: The UDM/MB-SMF detects a change in the status of the MBS session.

Then, the UDM/MB-SMF may send a status report message to the AS, to report a current status of the MBS session to the AS. Specifically, the UDM may report the status of the MBS session to the AS by implementing step 1110 and step 1111, or the UDM may report the status of the MBS session to the AS by implementing step 1112, or the MB-SMF may report the status of the MBS session to the AS by implementing step 1113 and step 1114, or the UDM may report the status of the MBS session to the AS by implementing step 1115.

Step 1110: The UDM sends the status report message to the NEF.

Step 1111: The NEF sends the status report message to the AS.

Step 1112: The UDM sends the status report message to the AS.

Step 1113: The MB-SMF sends the status report message to the NEF.

Step 1114: The NEF sends the status report message to the AS.

Step 1115: The UDM sends the status report message to the AS.

The status report message in step 1110 to step 1115 may include the MBS session identity, the status of the MBS session, a joined UE list (joined UE list), and a connection status (idle/connected per joined UE) of a joined UE (optional).

It should be noted that, if the AS can directly communicate with the UDM or the MB-SMF, a message between the AS and the UDM or the MB-SMF may not be forwarded by the NEF. In this case, the NEF is an optional network element.

Step 1116: The AS sends service data to the UE in the group based on the status of the MBS session.

In an example, if the AS determines that at least N UEs join the MBS session, and/or the AS determines that one or more specific UEs join the MBS session, the AS transmits the service data over the MBS session, where N is an integer greater than 0. That the AS transmits the service data over the MBS session may alternatively be described as that the AS sends the service data to an MB-UPF, or that the AS transmits the service data via a multicast path, or the like. Optionally, if the status of the UE related to the MBS session is a state in which the UE joins the session or a state in which the UE activates the session, the AS may further stops sending the service data to the UE via a unicast path of the UE, that is, the AS stops sending the service data to a PSAUPF of the UE.

In another example, the AS stops transmitting the service data over the MBS session when the AS determines that a last user of the group leaves the MBS session, or the AS determines that one or more specific users leave the MBS session, or the AS determines that a quantity of UEs in the MBS session is less than a preset threshold. Optionally, the AS may send the service data on the unicast path corresponding to the UE in the group.

In some implementations, the method 1100 may further include: An application server determines that the service data is to be sent; and the application server executes an MBS session activation procedure, which are not shown in the figure. This implementation is described below in detail with reference to FIG. 17 to FIG. 19B.

In this way, according to the method shown in FIG. 11, the AS may subscribe to a group (group)-specific status of the MBS session from the UDM/MB-SMF in a core network, that is, a status change at a granularity of the MBS session. Then, the AS sends service data to a UE in the group based on the status of the MBS session. In this way, the AS can flexibly control when to send/stop sending the service data to the MB-UPF. Further, for a specific UE, the AS may control when to stop/restart service data transmission on a unicast path. This can save network transmission resources while multicast service continuity is ensured.

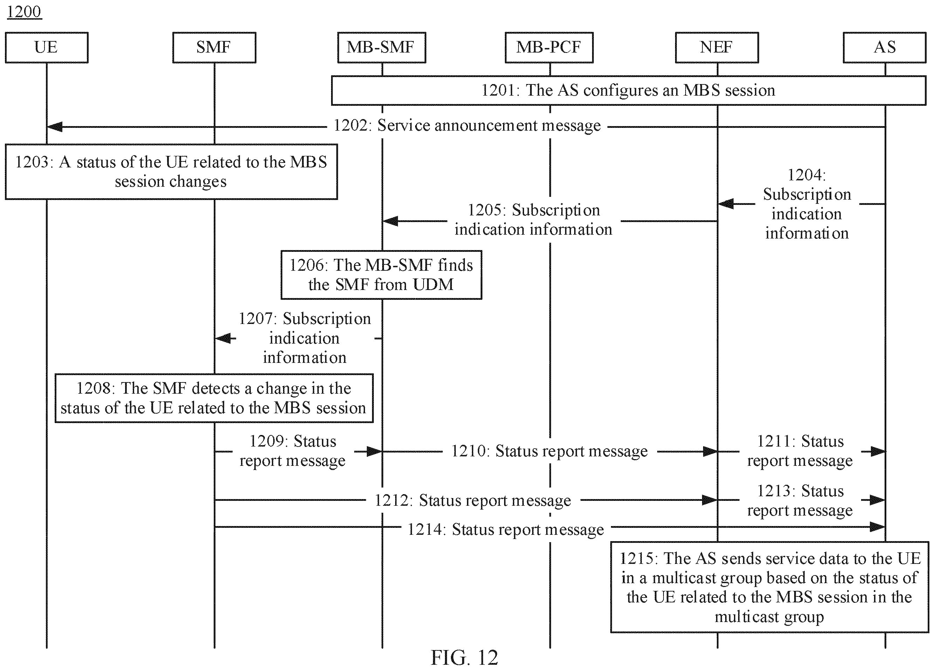

FIG. 12 is a schematic flowchart of a service data transmission method 1200 according to an embodiment of this application. The method 1200 may be applied to the system architectures shown in FIG. 1 and FIG. 2. The method 1200 includes at least a part of the following content.

Step 1201: An AS configures an MBS session.

Step 1201 is similar to step 1101. Different from step 1101, optionally, the AS may send subscription indication information to a 5GC in a process of configuring the MBS session. The subscription indication information is used for subscription to a status of a UE related to the MBS session in a group.

The status of the UE related to the MBS session may be "join", "active", "leave", "suspend", "inactive", "switch from a 5GS to a 4GS", "switch from a 4GS to a 5GS and join the MBS session", or the like.

Optionally, the subscription indication information may be further used for subscription to a connection status of the UE that joins the MBS session. The connection status of the UE may include an idle state, an inactive state, a connected state, and the like.

Optionally, the subscription indication information may include identifiers of UEs in a group and/or an identifier (for example, an external group identifier) of a group corresponding to the MBS session, an MBS session identity, and a notification endpoint address, so that the 5GC can learn UEs with foregoing information subscribed by the AS.

Step 1202: The AS sends a service announcement message to the UE.

Step 1203: The status of the UE related to the MBS session changes.

Step 1202 and step 1203 are similar to step 1102 and step 1103. Reference may be made to descriptions of step 1102 and step 1103. Details are not described herein again.

In the method 1200, the AS may subscribe to the status of the UE related to the MBS session from a serving SMF (serving SMF, SMF for short) of the UE. The SMF is an SMF serving a PDU session with the LTE, where the PDU session is associated with the MBS session. Specifically, the status of the UE related to the MBS session may be subscribed to from the SMF by implementing steps 1204 to 1207.

Step 1204: The AS sends the subscription indication information to an NEF.

Step 1205: The NEF sends the subscription indication information to an MB-SMF.

In a possible implementation, the NEF may send the subscription indication information to the MB-SMF based on the MBS session ID or an address of the MB-SMF discovered from an NRF.

Step 1206: The MB-SMF finds the SMF from the UDM or the NRF.

In a possible implementation, the MB-SMF may request for an address of the SMF from the UDM or the NRF based on the MBS session ID and the UE identifier, and the UDM or the NRF determines the SMF based on the request of the MB-SMF.

Step 1207: The MB-SMF sends the subscription indication information to the SMF.

For related descriptions of the subscription indication information in step 1204 to step 1207, refer to the descriptions in step 1201. Details are not described herein again. In a possible implementation, the AS sends the subscription indication information to the NEF by using a subscription request (multicast session status subscription) message. The NEF sends the subscription indication information to the MB-SMF by using the subscription request message. The MB-SMF sends the subscription indication information to the SMF by using the subscription request message.

It should be noted that, if the AS subscribes to the status of the UE related to the MBS session from the 5GC in step 1201, step 1204 to step 1207 may not be performed.

Step 1208: The SMF detects a change in the status of the UE related to the MBS session.

When the SMF detects a change in the status of the UE related to the MBS session, the SMF may send a status report message to the AS.

If the AS subscribes to a connection status of the UE that joins the MBS session from the SMF, the SMF may send the status report message to the AS when the SMF detects a change in the connection status of the UE. For example, when the SMF detects that the UE enters an idle state, the SMF sends the status report message to the AS.

It should be noted that the status of the UE related to the MBS session and the connection status of the UE may be sent in a plurality of status report messages, or may be sent in a same status report message. This is not limited in this application.

Then, the SMF may send the status report message to the AS, so as to report, to the AS, a current status of the UE related to the MBS session and/or the connection status of the UE. Specifically, the SMF may send the status report message to the AS by implementing step 1209 to step 1211, or may send the status report message to the AS by implementing step 1212 and step 1213, or may send the status report message to the AS by implementing step 1214.

Step 1209: The SMF sends the status report message to the MB-SMF.

Step 1210: The MB-SMF sends the status report message to the NEF.

Step 1211: The NEF sends the status report message to the AS.

Step 1212: The SMF sends the status report message to the NEF.

Step 1213: The NEF sends the status report message to the AS.

Step 1214: The SMF sends the status report message to the AS.

The status report message in step 1209 to step 1214 may include the MBS session identity, the status of the MBS session, a joined UE list, and a connection status of a joined UE (optional).

Step 1215: The AS sends service data to a UE in a group based on a status of the UE related to the MBS session in the group.

If the AS further subscribes to the connection status of the UE that joins the MBS session from the SMF, the AS may send the service data to the UE in the group based on the status of the UE related to the MBS session in the group, and on the connection status of the UE that joins the MBS session.

In an example, if the AS determines that at least N UEs join the MBS session, and/or the AS determines that one or more specific UEs join the MBS session, the AS transmits the service data over the MBS session, where N is an integer greater than 0. That the AS transmits the service data over the MBS session may alternatively be described as that the AS sends the service data to an MB-UPF, or that the AS transmits the service data via a multicast path, or the like. Optionally, if the status of the UE related to the MBS session is a state in which the UE joins the session or a state in which the UE activates the session, the AS may further stops sending the service data to the UE via a unicast path of the UE, that is, the AS stops sending the service data to a PSA UPF of the UE.

In another example, the AS stops transmitting the service data over the MBS session when the AS determines that a last user of the group leaves the MBS session, or the AS determines that one or more specific users leave the MBS session, or the AS determines that a quantity of UEs in the MBS session is less than a preset threshold. Optionally, the AS may send the service data on the unicast path corresponding to the UE in the group.

In some implementations, the method 1200 may further include: An application server determines that the service data is to be sent; and the application server executes an MBS session activation procedure, which are not shown in the figure. This implementation is described below in detail with reference to FIG. 17 to FIG. 19B.

In this way, in the method shown in FIG. 12, the AS may subscribe from the SMF in the core network to the status of the UE in the group related to the MBS session. Optionally, the AS may further subscribe, from the SMF, to the connection status of the UE that joins the MBS session. Further, the status of the MBS session may be obtained through statistics collection based on the obtained information, and then service data is sent to the UE in the group based on the status of the MBS session. In this way, the AS can flexibly control when to send/stop sending the service data to the MB-UPF. Further, for a specific UE, the AS may control when to stop/restart service data transmission on a unicast path. This can save network transmission resources while multicast service continuity is ensured.

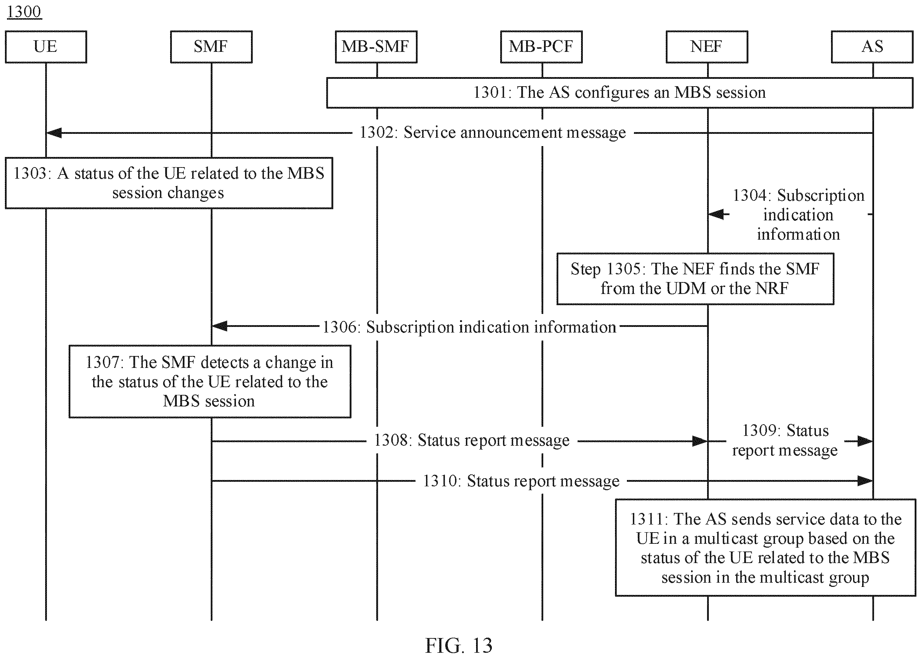

FIG. 13 is a schematic flowchart of a service data transmission method 1300 according to an embodiment of this application. The method 1300 may be applied to the system architectures shown in FIG. 1 and FIG. 2. In the method 1300, an SMF is not determined by using an MB-SMF, but the NEF determines the SMF by using a UMD or an NRF.

The method 1300 includes at least a part of the following content.

Step 1301: An AS configures an MBS session.

Step 1302: The AS sends a service announcement message to a UE.

Step 1303: A status of the UE related to the MBS session changes.

Step 1304: The AS sends a subscription indication information to the NEF

Step 1305: The NEF finds the SMF from the UDM or the NRF.

In a possible implementation, the NEF sends a request message to the UDM or the NRF. The request message is used to search for an SMF serving a UE ID and an MBS session ID. The UDM or NRF returns, based on the request message, an SMF that meets the condition.

Step 1306: The NEF sends the subscription indication information to the SMF.

Step 1307: The SMF detects a change in the status of the UE related to the MBS session.

Step 1308: The SMF sends a status report message to the NEF.

Step 1309: The NEF sends the status report message to the AS.

Step 1310: The SMF sends the status report message to the AS.

Descriptions in step 1308 and step 1309 and descriptions in step 1310 are two manners of sending the status report message to the AS by the SMF.

Step 1311: The AS sends service data to a UE in a group based on a status of the UE related to the MBS session in the group.

In some implementations, the method 1300 may further include: An application server determines that the service data is to be sent; and the application server executes an MBS session activation procedure, which are not shown in the figure. This implementation is described below in detail with reference to FIG. 17 to FIG. 19B.

For more detailed description of the method 1300, refer to the method 1200. Details are not described herein again.

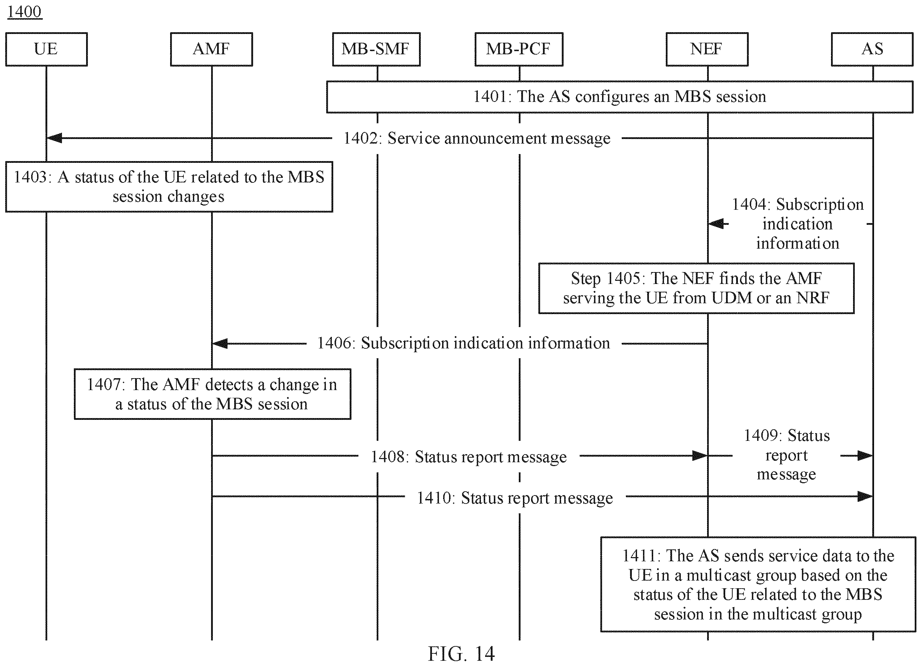

FIG. 14 is a schematic flowchart of a service data transmission method 1400 according to an embodiment of this application. The method 1400 may be applied to the system architectures shown in FIG. 1 and FIG. 2. In the method 1400, an AS subscribes to, from an AMF, a status of a UE related to an MBS session and/or a connection status of a UE that joins the MBS session.

The method 1400 includes at least a part of the following content.

Step 1401: The AS configures an MBS session.

Step 1402: The AS sends a service announcement message to a UE.

Step 1403: A status of the UE related to the MBS session changes.

Step 1404: The AS sends subscription indication information to an NEF.

Step 1405: The NEF finds a serving AMF (serving AMF) (referred to as AMF) of the UE from UDM or an NRF.

In a possible implementation, the NEF sends a request message to the UDM or the NRF. The request message is used to search for an AMF serving a UE ID and an MBS session ID. The UDM or NRF returns, based on the request message, an AMF that meets the condition.

Step 1406: The NEF sends the subscription indication information to the AMF.

Step 1407: The AMF detects a change in the status of the UE related to the MBS session.

Step 1408: The AMF sends a status report message to the NEF.

Step 1409: The NEF sends the status report message to the AS.

Step 1410: The AMF sends the status report message to the AS.

Descriptions in step 1408 and step 1409 and descriptions in step 1410 are two manners of sending the status report message to the AS by the AMF.

Step 1411: The AS sends service data to a UE in a group based on a status of the UE related to the MBS session in the group.

In some implementations, the method 1400 may further include: An application server determines that the service data is to be sent; and the application server executes an MBS session activation procedure, which are not shown in the figure. This implementation is described below in detail with reference to FIG. 17 to FIG. 19B.

For more detailed description of the method 1400, refer to the method 1200. Details are not described herein again.

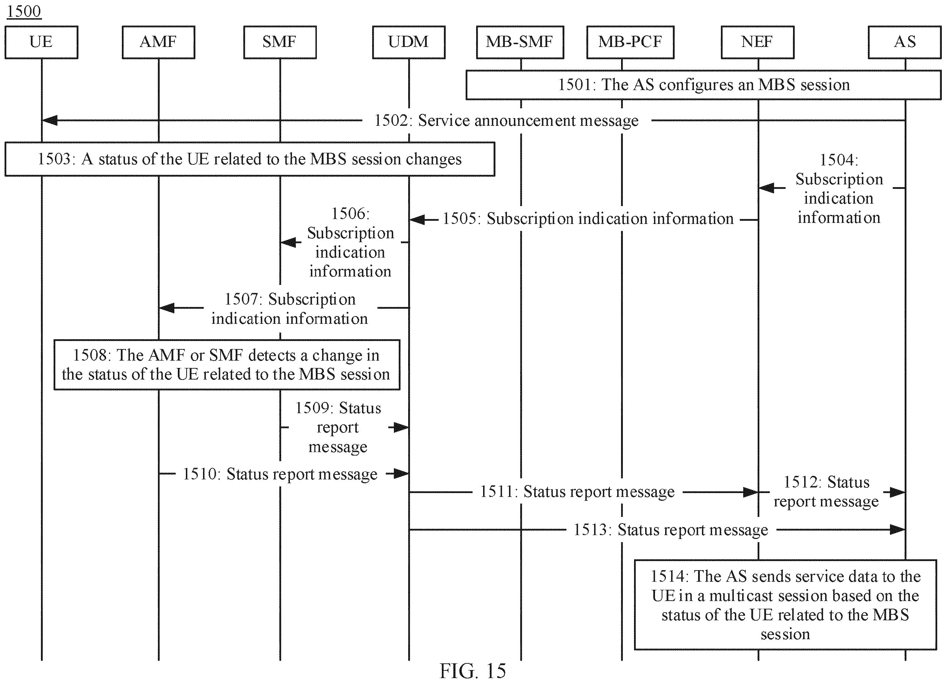

FIG. 15 is a schematic flowchart of a service data transmission method 1500 according to an embodiment of this application. The method 1500 may be applied to the system architectures shown in FIG. 1 and FIG. 2. In the method 1500, an AS subscribes to, from UDM, a status of a UE related to an MBS session and/or a connection status of a UE that joins the MBS session.

The method 1500 includes at least a part of the following content.

Step 1501: The AS configures an MBS session.

Step 1502: The AS sends a service announcement message to a UE.

Step 1503: A status of the UE related to the MBS session changes.

Step 1504: The AS sends subscription indication information to an NEF.

Step 1505: The NEF sends the subscription indication information to the UDM.

Step 1506: The UDM sends the subscription indication information to an SMF.

Step 1507: The UDM sends the subscription indication information to an AMF.

In the method 1500, only step 1506 and subsequent step 1509 may be performed, or only step 1507 and subsequent step 1510 may be performed, or step 1506, step 1507 and subsequent step 1509 and step 1510 may be simultaneously performed. This is not limited.

It should be noted that, before sending the subscription indication information to the SMF and/or the AMF, the UDM may determine the SMF and/or the AMF. In a possible implementation, the UDM finds the serving SMF and/or the serving AMF of the LTE based on a UE ID and the MBS session.

Step 1508: The SMF and/or the AMF detects a change in the status of the UE related to the MBS session.

Step 1509: The SMF sends a status report message to the UDM.

Step 1510: The AMF sends the status report message to the UDM.

Step 1511: The UDM sends the status report message to the NEF.

Step 1512: The NEF sends the status report message to the AS.

Step 1513: The UDM sends the status report message to the AS.

Descriptions in step 1511 and step 1512 and descriptions in step 1513 are two manners of sending the status report message to the AS by the UDM.

Step 1514: The AS sends service data to a UE in a group based on a status of the UE related to the MBS session in the group.

In some implementations, the method 1500 may further include: An application server determines that the service data is to be sent; and the application server executes an MBS session activation procedure, which are not shown in the figure. This implementation is described below in detail with reference to FIG. 17 to FIG. 19B.

For more detailed description of the method 1500, refer to the method 1200. Details are not described herein again.

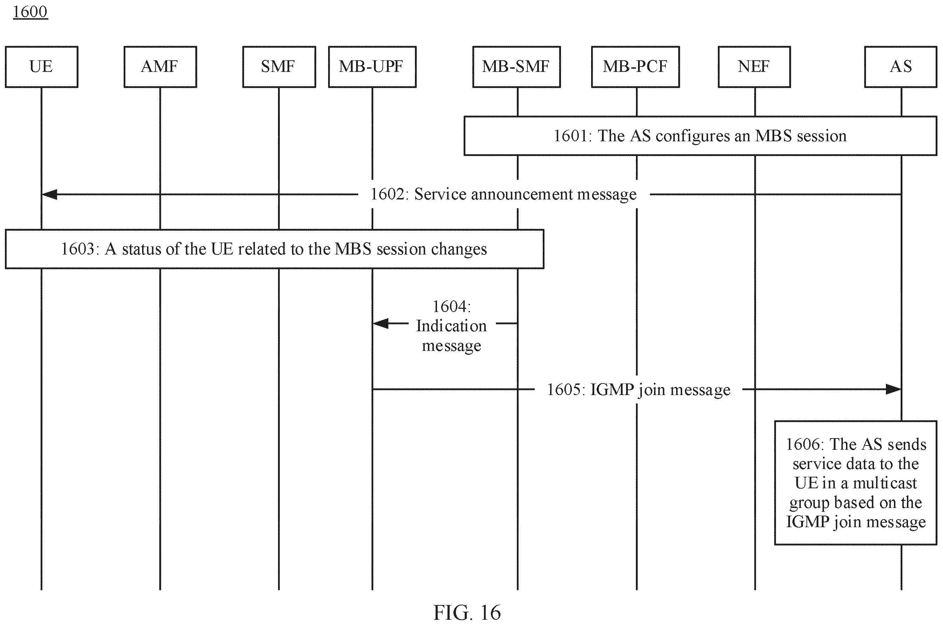

FIG. 16 is a schematic flowchart of a service data transmission method 1600 according to an embodiment of this application. The method 1600 may be applied to the system architectures shown in FIG. 1 and FIG. 2.

The method 1600 includes at least a part of the following content.

Step 1601: An AS configures an MBS session.

Step 1602: The AS sends a service announcement message to a UE.

Step 1603: A status of the UE related to the MBS session changes.

Step 1604: When detecting that a first UE joins the MBS session, an MB-SMF sends an indication message to the MB-UPF.

The indication message indicates the MB-UPF to send an IGMP join message to the AS.

In a possible implementation, when the MB-SMF receives an MBS session context create message corresponding to an MBS session ID for the first time or when an MBS session context is successfully created, the MB-SMF sends the indication message to the MB-UPF.

The IGMP join message may be sent only when the first UE joins the MBS session, and the IGMP join message may not be sent by the MB-UPF for a UE that joins the MBS session subsequently.

Step 1605: After receiving the indication message, the MB-UPF sends the IGMP join message to the AS.

Step 1606: The AS sends service data to a UE in a group based on the IGMP join message.

In a possible implementation, after receiving the IGMP join message sent by the MB-UPF, the AS may send the service data to the MB-UPF, that is, send the service data via a multicast path.

In other implementations, the AS may further send the service data to the UE in the group based on the IGMP join message and a status of the MBS session. A manner in which the AS learns the status of the MBS session may be any manner mentioned above.

In some implementations, the method 1600 may further include: An application server determines that the service data is to be sent; and the application server executes an MBS session activation procedure, which are not shown in the figure. This implementation is described below in detail with reference to FIG. 17 to FIG. 19B.

Currently, when the MBS session is established and the UE joins the MBS session, if no data is sent over the MBS session, the MBS session may enter an inactive (inactive) state after being triggered by a network side. Correspondingly, a UE that joins the MBS session may enter an idle (idle) state. Subsequently, if the AS needs to send service data over the MBS session, the AS directly sends the service data (for example, multicast data) to the MB-UPF, and triggers a core network to activate (activate) the MBS session according to a mechanism in the specification 23.247. An MBS session activation procedure may include paging (paging) UEs in an RRC idle state and/or RRC inactive state. After a first UE enters the connected state and activates a shared N3 channel (the shared N3 channel is used to transmit the service data from the MB-UPF to the RAN), the service data from the MB-UPF reaches the RAN, and then, the RAN may send the service data. However, one or more UEs may enter the connected state only after the RAN starts to send the service data, and these UEs may fail to receive one or more data packets first sent by the RAN. This has little impact on a service that is not sensitive to packet loss (for example, a voice service and a video service), but has a serious impact on a service or signaling that is sensitive to packet loss. For example, for control signaling at an application layer (for example, a floor control (floor control) message, MapGroupToMBSsession message, and the like of a real-time transport control protocol (real-time transport control protocol, RTCP)), packet loss may cause service logic problems (for example, failure to join a call session).

For the foregoing problem, this application provides a service data transmission method. According to the method, before an AS sends service data, it can be ensured that a UE that has joined an MBS session is in a connected state. In this way, a probability of packet loss can be reduced.

FIG. 17 is a schematic flowchart of a service data transmission method 1700 according to an embodiment of this application. The method 1700 may be applied to the system architectures shown in FIG. 1 and FIG. 2. The method 1700 includes at least a part of the following content.

Step 1701: An AS determines that service data is to be sent.

That an AS determines that service data is to be sent may also be described as that an AS needs to send service data, an AS is to send service data, an AS determines that service data needs to be sent, or an AS obtains service data. The specific service data refers to downlink service data sent by the AS to at least one receiving terminal of the service.

Step 1702: The AS sends seventh information to a core network device.

The seventh information is used to activate an MBS session.

In some implementations, the core network device may be an MB-SMF, and the seventh information may be a session activation request. The session activation request is used to request the MB-SMF to activate the MBS session, where the request carries an MBS session identity, for example, a TMGI. After receiving the seventh information, the MB-SMF may start a session activation procedure.

In some implementations, the core network device may be an MB-UPF, and the seventh information may be data or information used to activate the MBS session. Optionally, the seventh information may be user plane data, and the user plane data may be data generated by an application server and sent to a terminal or a client by using an application layer protocol. The user plane data is at least one copy of the service data, and the copy of the service data is the same as the service data. Alternatively, the user plane data is a subset of the service data, that is, the seventh information may be a part of the service data, for example, one or more data packets of the service data. Alternatively, the user plane data is control plane signaling information related to the service data, for example, application-layer user plane control signaling. Alternatively, the user plane data is redundant data or the like. The control plane signaling information related to the service data may include specific user plane control signaling, for example, an application paging (application paging) message, a report request (report request) message, a redundancy (redundancy) information notification, or the like. Table 2 shows several examples of the seventh information. After receiving the seventh information, the MB-UPF may send a first notification message to the MB-SMF, to indicate the MB-SMF to start the session activation procedure. After receiving a first notification message, the MB-SMF may start the session activation procedure.

**Table 2**

| Type (type) | Payload (payload) | Remarks |
|---|---|---|
| (1) Application paging message | Null (null)/Void (void) | After receiving the message, an application client on a UE may directly discard the data packet, and does not perform other processing. |
| (2) Redundancy information notification | Null/Void | After receiving the message, an application client on a LTE may directly discard the data packet, and does not perform other processing. |
| (3) Report request message | Null/Void | After receiving the message, an application client on a UE may report a message to a server, where the message may implicitly indicate the UE to enter a CM-Connected state. |

Step 1703: The core network device and the terminal perform the session activation procedure.

In a possible implementation, the session activation procedure in the specification 23.247 may be implemented. For more detailed description, refer to a related specification. Details are not described herein again.

In this application, there are a plurality of manners in which the AS determines that the service data can be sent over the MBS session. This is not limited in this application. That the AS determines that the service data can be sent over the MBS session may be understood as that the AS determines to start or immediately send data over the MBS session, or the like. The following describes several manners.

It should be noted that the following manners may be separately implemented or combined. This is not limited in this application.

### Manner 1: Step 1704

Step 1704: The core network device sends a session activation response message to the AS.

Optionally, the session activation response message may indicate that the MBS session is successfully activated. For example, the MB-SMF sends the session activation response message after execution of the session activation procedure is completed (that is, the MBS session is successfully activated). After the MBS session is successfully activated, a user that has joined the MBS session (a UE that has successfully joined the MBS session and that is still in the session) enters the connected state. Therefore, the message may implicitly indicate that the user that has joined the MBS session enters the connected state. Alternatively, after receiving the message, the AS can determine that the user that has joined the MBS session enters the connected state.

Optionally, the session activation response message may indicate the core network device to receive an MBS session activation request. For example, the MB-SMF sends the session activation response message after receiving the first notification message from the MB-UPF, or after receiving the session activation request message from the AS, or after the MB-SMF starts to implement the session activation procedure. In this case, the message may indicate that the MBS session has entered the active state, or indicate that the user that has joined the MBS session (the UE that has successfully joined the MBS session and that is still in the MBS session) enters the connected state.

After receiving the session activation response message, the AS determines that the service data can be sent over the MBS session.

### Manner 2: Step 1705

Step 1705: The AS determines that a first timer expires.

The first timer may be started after the AS sends the seventh information. Timing duration of the first timer may be dynamically specified by the AS, or may be a duration value preconfigured in the AS. Usually, the duration may be determined based on a time (T1) at which the core network pages (pages) the terminal and the terminal successfully completes a service request (service request). For example, the timing duration of the first timer is slightly greater than the foregoing time (T1).

In other words, after sending the seventh information and waiting for a period of time (timing duration of the first timer), the AS considers that the user that has joined the MBS session enters the connected state. In this way, the service data may be sent over the MBS session.

### Manner 3: Step 1706 to step 1708

Step 1706: The core network device sends seventh information to the UE.

In this case, the seventh information may be user plane data. For specific descriptions, refer to the foregoing descriptions. Details are not described herein again.

Step 1707: After receiving the seventh information, the UE may send eighth information to the AS.

The eighth information is response information or acknowledgment information of the terminal for the seventh information, and further indicates that the seventh information is successfully received.

It should be noted that the AS may send the seventh information to a plurality of UEs, and a UE that receives the seventh information in the plurality of UEs may send the eighth information to the AS.

Step 1708: The AS determines, based on the received eighth information, to transmit the service data over the MBS.

For example, the AS may count received eighth information, and determine whether users reporting the eighth information reach a first threshold, where the first threshold may be an integer greater than 0. If the users reporting the eighth information reach the first threshold, the AS determines that the service data may be sent over the MBS session. For example, if all UEs that have joined the MBS session feed back the eighth information, the AS determines that the service data may be sent over the MBS session. If the users reporting the eighth information does not reach the first threshold, the AS determines that the service data cannot be sent over the MBS session. For another example, if all of (one or more) specific users expected by the service feed back the eighth information, the AS determines that the service data may be sent over the MBS session. If at least one of the specific users expected by the service does not feed back the eighth information, the AS determines that the service data cannot be sent over the MBS session.

### Manner 4 (not shown in the figure)

In manner 4, the AS requests for or subscribes to, from the core network device, the status of the MBS session and/or the connection status of the UE that has joined the MBS session. For a specific implementation, refer to the manners of obtaining the first information in FIG. 6 to FIG. 16. The AS determines that the service data can be sent over the MBS session when the core network device indicates that the status of the MBS session changes into the active state, and/or the AS determines, based on the connection status of the UE that has joined the MBS session, that a quantity of UEs that have joined the MBS session and that are in the idle state and/or inactive state is equal to or less than a second threshold or that a quantity of UEs that have joined the MBS session and that are in the connected mode is greater than or equal to a third threshold, and/or all of the (one or more) terminals related to the specific users expected by the service enter the connected state. The terminal related to the user may be a terminal that belongs to the user, or a terminal that is used by the user or that is used for account login, where the user accesses a service and receives service data with the terminal.

It should be noted that Manner 1 and Manner 2 may be applied to a case in which the core network device is an MB-SMF and an MB-UPF, Manner 3 may be applied to a case in which the core network device is an MB-UPF, and Manner 4 may be applied to a case in which the core network device is an MB-SMF. In this way, in the foregoing manner, the AS determines that the service data may be sent over the MBS session, and may subsequently perform step 1709.

Step 1709: The AS sends the service data to the UE over the MBS session.

In a possible implementation, the AS sends the service data to the UE over the MBS session when at least one of the following conditions is met: The session activation response message is received; the first timer expires; a notification indicating that the MBS session changes into the active state is received; and the users reporting the eighth information reach the first threshold.

In some implementations, step 1710 and step 1711 may be further performed before step 1702.

Step 1710: The AS obtains the status of the MBS session and/or the connection status of the UE that has joined the MBS session.

In a possible implementation, the AS may obtain the status of the MBS session from the core network device, where the status of the MBS session may include the active state and the inactive state.

In a possible implementation, the AS may obtain the status of the UE related to the MBS session from the core network device. The status of the UE related to the MBS session may include at least one of "join", "active", "leave", "inactive", "suspend", "switch from a first communication system to a second communication system and join", and "switch from a second communication system to a first communication system and leave". Then, the AS may determine the status of the MBS session based on the status of the UE related to the MBS session. For example, when all UEs leave the MBS session, the AS determines that the MBS session enters the inactive state.

In a possible implementation, the AS may obtain the connection status of the UE that has joined the MBS session from the core network device, where the connection status of the UE that has joined the MBS session may include the active state, the idle state, and the inactive state.

Step 1711: The AS determines, based on the status of the MBS session and/or the connection status of the UE that has joined the MBS session, to initiate the MBS session activation procedure.

In a possible implementation, the AS may determine to initiate the MBS session activation procedure when the MBS session is in the inactive state, and/or the quantity of UEs that have joined the MBS session and that are in the idle state and/or inactive state reaches the second threshold or a quantity of UEs that have joined the MBS session and that are in the connected state is less than the third threshold, and/or if the one or more specific UEs have not joined the MBS session or the one or more specific UEs have joined the MBS session but are in the idle state or the inactive state. The second threshold and the third threshold may be integers greater than 0.

It should be noted that, if the method 1700 does not include step 1710 and step 1711, it may be understood that the AS always performs the MBS session activation procedure when determining that the service data is to be sent, without considering that the MBS session may be currently in the active state or the inactive state.

In this way, according to the foregoing technical solution, it can be ensured that the MBS session is in the active state (in other words, it can be ensured that the UE that has joined the MBS session is in the connected state) before the AS sends the service data to reduce a probability of packet loss.

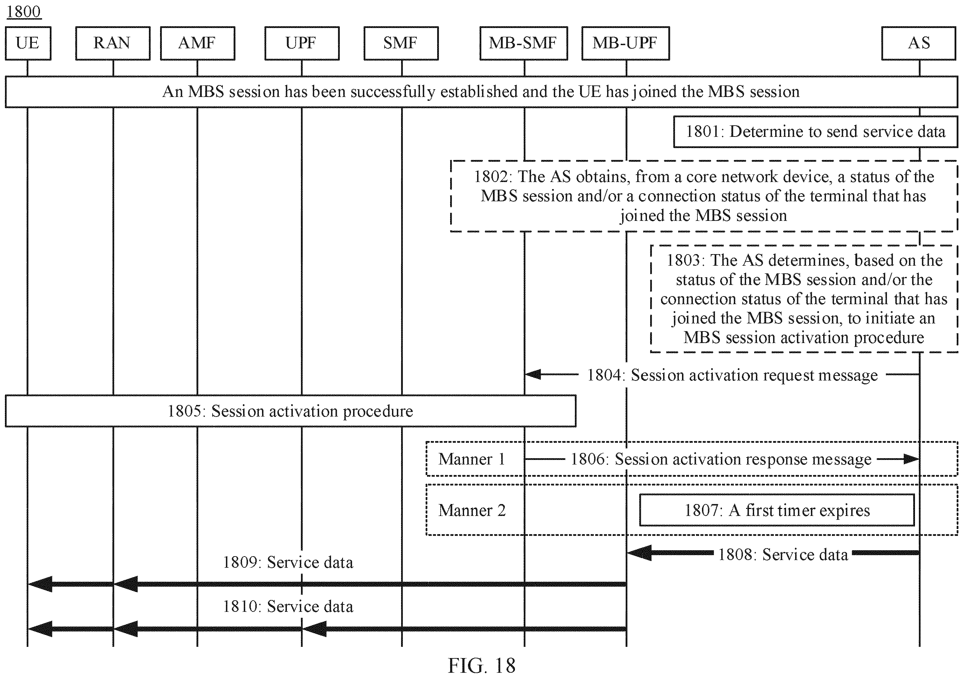

For ease of understanding, the following describes embodiments of this application in more detail with reference to FIG. 18 to FIG. 19B.

FIG. 18 is a schematic flowchart of a service data transmission method 1800 according to an embodiment of this application. The method 1800 may be applied to the system architectures shown in FIG. 1 and FIG. 2. A session activation request message may correspond to the seventh information.

A prerequisite for executing the method 1800 is that an MBS session has been successfully established, a UE has successfully joined the MBS session, no data is sent in the current MBS session, and the MBS session may be in an active state or an inactive state. The UE may be a terminal used by a user in an application layer service or a terminal used by an affiliated (affiliated) user in a group. Specifically, it may be understood that the user in the application layer service logs in to or uses an application-layer client program on the terminal, to obtain the application layer service.

The method 1800 includes at least a part of the following content.

Step 1801: An AS determines that service data needs to be sent.

In a scenario, the AS receives uplink data of a user in a group, a destination receiver of the uplink data is the user in the group, and the AS needs to send the data to the user in the group. The uplink data may be media data (media data), for example, speech, audio, a video, an SMS, or file.

In another scenario, the AS receives a media sending permission request message (for example, a floor request (floor request) message or a transmit media request (transmit media request) message) sent by the group user, where the permission request message is used to request a permission for a requester to send data. When establishment of an application layer user plane is not completed, the AS needs to send a notification message to the user in the group. In this case, the service data is a notification message, and is used to notify the user that the group or group communication is bound with the MBS session, where the notification message may be a MapGroupToMBSsession message. When the application layer user plane is established, the AS needs to send, to the user in the group, a media sending permission notification message, to notify the user that a media transmission permission is granted to another user. The notification message may be a floor taken (floor taken) message, a media transmission notification, or the like. In this case, the service data is the media sending permission notification message.

Step 1802: The AS obtains a status of the MBS session and/or a connection status of the UE that has joined the MBS session.

In a possible implementation, the AS may obtain the status of the MBS session from a core network device, where the status of the MBS session may include an active state and an inactive state.

In a possible implementation, the AS may obtain the status of the UE related to the MBS session from the core network device. The status of the UE related to the MBS session may include at least one of "join", "active", "leave", "inactive", "suspend", "switch from a first communication system to a second communication system and join", and "switch from a second communication system to a first communication system and leave". Then, the AS may determine the status of the MBS session based on the status of the UE related to the MBS session. For example, when all UEs leave the MBS session, the AS determines that the MBS session enters the inactive state.

In a possible implementation, the AS may obtain the connection status of the UE that has joined the MBS session from the core network device, where the connection status of the UE that has joined the MBS session may include the active state, the idle state, and the inactive state.

Step 1803: The AS determines, based on the status of the MBS session and/or the connection status of the UE that has joined the MBS session, to initiate the MBS session activation procedure.

In a possible implementation, the AS may determine to initiate the MBS session activation procedure when the MBS session is in the inactive state, and/or a quantity of UEs that have joined the MBS session and that are in the idle state and/or inactive state reaches a second threshold or a quantity of UEs that have joined the MBS session and that are in the connected state is less than a third threshold, and/or if at least one of (one or more) terminals related to specific users expected by the service has not joined the connected state. The second threshold and the third threshold may be integers greater than 0.

It should be noted that step 1802 and step 1803 are optional steps. If the method 1800 does not include step 1802 and step 1803, it may be understood that the AS always performs the MBS session activation procedure when determining that the service data is to be sent, without considering that the MBS session may be currently in the active state or the inactive state.

Step 1804: The AS sends a session activation request message to an MB-SMF.

The session activation request message is used to request to activate the MBS session. The session activation request message may include an MBS session identity (for example, a TMGI).

In a possible implementation, the session activation request message may be sent to the MB-SMF by using an NEF/MBSF.

Step 1805: After receiving the session activation request message, the MB-SMF may start the session activation procedure.

In a possible implementation, the session activation procedure in the specification 23.247 may be implemented. For more detailed description, refer to a related specification. Details are not described herein again.

In a possible implementation, the MB-SMF may initiate the session activation procedure when determining that the MBS session is in the inactive state, and/or the quantity of UEs that have joined the MBS session and that are in the idle state and/or inactive state reaches the second threshold or the quantity of UEs that have joined the MBS session and that are in the connected state is less than the third threshold. When the MB-SMF determines that the MBS session is in the active state, the MB-SMF directly returns a response to the session activation request to the AS.

In the method 1800, there are a plurality of manners in which the AS determines that the service data can be sent over the MBS session. This is not limited in this application. That the AS determines that the service data can be sent over the MBS session may be understood as that the AS determines to start or immediately send data over the MBS session, or the like. The following describes several manners.

It should be noted that the following manners may be separately implemented or combined. This is not limited in this application.

### Manner 1: Step 1806

Step 1806: The MB-SMF sends the session activation response message to the AS.

Optionally, the session activation response message may indicate that the MBS session is successfully activated. For example, the MB-SMF sends the session activation response message after execution of the session activation procedure is completed (that is, the MBS session is successfully activated). After the MBS session is successfully activated, a user that has joined the MBS session (a UE that has successfully joined the MBS session and that is still in the session) enters the connected state. Therefore, the message may implicitly indicate that the user that has joined the MBS session enters the connected state. Alternatively, after receiving the message, the AS can determine that the user that has joined the MBS session enters the connected state.

Optionally, the session activation response message may indicate the core network device to receive an MBS session activation request. For example, the MB-SMF sends the session activation response message after receiving the session activation request message from the AS or after the MB-SMF starts to execute the session activation procedure. In this case, the message may indicate that the MBS session is in the active state, or that a user has joined the MBS session (a UE that has successfully joined the MBS session and that is still in the MBS session) enters the connected state.

After receiving the session activation response message, the AS determines that the service data can be sent over the MBS session.

### Manner 2: Step 1807

Step 1807: The AS determines that a first timer expires.

The first timer may be started after the AS sends the session activation request message. Timing duration of the first timer may be dynamically specified by the AS, or may be a duration value preconfigured in the AS. Usually, the duration may be determined based on a time (T1) at which the core network pages (pages) the terminal and the terminal successfully completes a service request (service request). For example, the timing duration of the first timer is slightly greater than the foregoing time (T1).

In other words, after sending the session activation request message and waiting for a period of time (timing duration of the first timer), the AS considers that the user that has joined the MBS session enters the connected state. In this way, the service data may be sent over the MBS session.

### Manner 3 (not shown in the figure)

In manner 3, the AS requests for or subscribes to, from the core network device, the status of the MBS session and/or the connection status of the UE that has joined the MBS session. For a specific implementation, refer to the manners of obtaining the first information in FIG. 6 to FIG. 16. The AS determines that the service data can be sent over the MBS session when the core network device indicates that the status of the MBS session changes into the active state, and/or the AS determines, based on the connection status of the UE that has joined the MBS session, that a quantity of UEs that have joined the MBS session and that are in the idle state and/or inactive state is equal to or less than a second threshold or that a quantity of UEs that have joined the MBS session and that are in the connected mode is greater than or equal to a third threshold, and/or all of the (one or more) terminals related to the specific users expected by the service enter the connected state. The terminal related to the user may be a terminal that belongs to the user, or a terminal that is used by the user or that is used for account login, where the user accesses a service and receives service data with the terminal.

In this way, in the foregoing manner, the AS determines that the service data may be sent over the MBS session, and may subsequently perform step 1808.

Step 1808: The AS sends the service data to the MB-UPF.

In a possible implementation the AS sends the service data to the UE over the MBS session when at least one of the following conditions is met: The session activation response message is received; the first timer expires; and a notification indicating that the MBS session changes into the active state is received.

Step 1809: The MB-UPF sends the service data to the UE through a RAN.

Specifically, the MB-UPF may send the service data through PTP or PTM.

Step 1810: The MB-UPF sends the service data to the UE through the UPF and the RAN.

Specifically, the MB-UPF may send the service data to the unicast-serving UPF, and then the unicast-serving UPF sends the service data to the UE by using a unicast PDU session.

It should be noted that the MB-UPF may send the service data to one or more UEs served by the MB-UPF. When the RAN in which the UE is located supports multicast, the service data may be sent to the UEs by implementing step 1809. When the RAN in which the UE is located does not support multicast, the service data may be sent to the UE by implementing step 1810.

In this way, according to the foregoing technical solution, it can be ensured that the MBS session is in the active state (in other words, it can be ensured that the UE that has joined the MBS session is in the connected state) before the AS sends the service data to reduce a probability of packet loss.

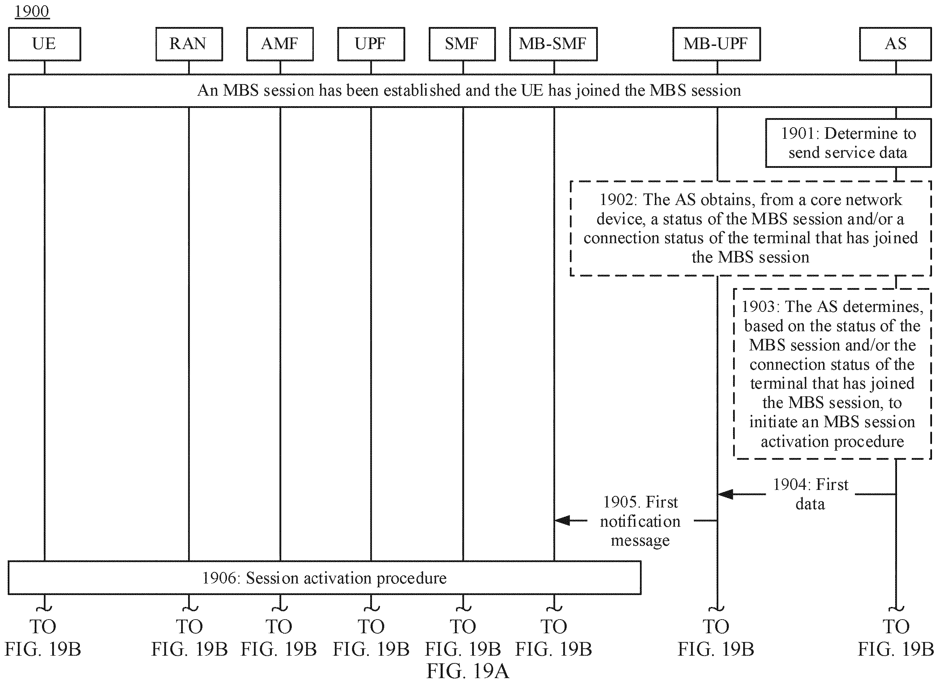

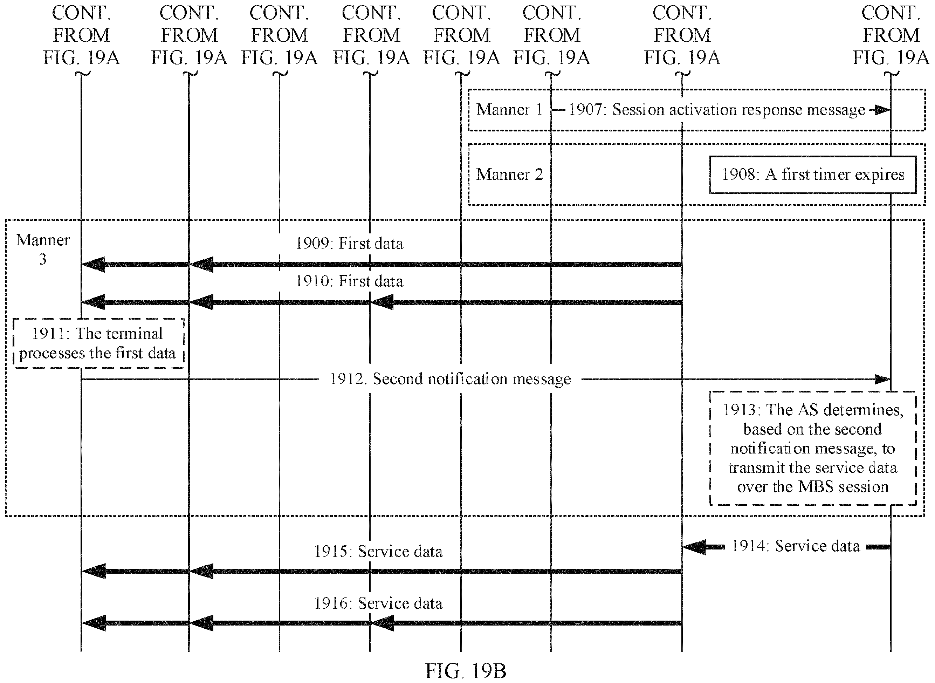

FIG. 19A and FIG. 19B are a schematic flowchart of a service data transmission method 1900 according to an embodiment of this application. The method 1900 may be applied to the system architectures shown in FIG. 1 and FIG. 2. First data may correspond to the foregoing seventh information, and a second notification message may correspond to the foregoing eighth information.

A prerequisite for executing the method 1900 is that an MBS session has successfully established, a UE has successfully joined the MBS session, no data is sent in the current MBS session, and the MBS session may be in an active state or an inactive state. The UE may be a terminal used by a user in an application layer service or a terminal used by an affiliated (affiliated) user in a group. Specifically, it may be understood that the user in the application layer service logs in to or uses an application-layer client program on the terminal, to obtain the application layer service.

The method 1900 includes at least a part of the following content.

Step 1901: An AS determines that service data needs to be sent.

Step 1902: The AS obtains a status of the MBS session and/or a connection status of the UE that has joined the MBS session.

Step 1903: The AS determines, based on the status of the MBS session and/or the connection status of the UE that has joined the MBS session, to initiate the MBS session activation procedure.

For specific descriptions of step 1901 to step 1903, refer to step 1801 to step 1803. Details are not described herein again.

Step 1904: The AS sends the first data to an MB-UPF.

The first data may also be referred to as MBS session activation data or MBS session activation information.

Optionally, the first information is user plane data, and the user plane data may be data generated by an application server and sent to a terminal or a client by using an application layer protocol. The user plane data is at least one copy of the service data, and the copy of the service data is the same as the service data. Alternatively, the user plane data is a subset of the service data, that is, the seventh information may be a part of the service data, for example, one or more data packets of the service data. Alternatively, the user plane data is control plane signaling information related to the service data, for example, application-layer user plane control signaling. Alternatively, the user plane data is redundant data or the like. The control plane signaling information related to the service data may include specific user plane control signaling, for example, an application paging message, a report request message, a redundancy information notification, or the like. For more detailed description, refer to Table 2.

It should be noted that, the terminal side may not need to perceive that the first data is used to activate the MBS session.

Step 1905: After receiving the first data, the MB-UPF sends a first notification message to the MB-SMF.

The first notification message indicates the MB-SMF to implement the MBS session activation procedure.

Step 1906: After receiving the first notification message, the MB-SMF may start the session activation procedure.

In a possible implementation, the session activation procedure in the specification 23.247 may be implemented. For more detailed description, refer to a related specification. Details are not described herein again.

In the method 1900, there are a plurality of manners in which the AS determines that the service data can be sent over the MBS session. This is not limited in this application. That the AS determines that the service data can be sent over the MBS session may be understood as that the AS determines to start or immediately send data over the MBS session, or the like. The following describes several manners.

It should be noted that the following manners may be separately implemented or combined. This is not limited in this application.

### Manner 1: Step 1907

Step 1907: The MB-SMF sends the session activation response message to the AS.

Optionally, the session activation response message may indicate that the MBS session is successfully activated. For example, the MB-SMF sends the session activation response message after execution of the session activation procedure is completed (that is, the MBS session is successfully activated). After the MBS session is successfully activated, a user that has joined the MBS session (a UE that has successfully joined the MBS session and that is still in the session) enters the connected state. Therefore, the message may implicitly indicate that the user that has joined the MBS session enters the connected state. Alternatively, after receiving the message, the AS can determine that the user that has joined the MBS session enters the connected state.

Optionally, the session activation response message may indicate the core network device to receive an MBS session activation request. For example, the MB-SMF sends the session activation response message after receiving the session activation request message from the AS or after the MB-SMF starts to execute the session activation procedure. In this case, the message may indicate that the MBS session is in the active state, or that a user has joined the MBS session (a UE that has successfully joined the MBS session and that is still in the MBS session) enters the connected state.

After receiving the session activation response message, the AS determines that the service data can be sent over the MBS session.

### Manner 2: Step 1908

Step 1908: The AS determines that a first timer expires.

The first timer may be started after the AS sends the session activation request message. Timing duration of the first timer may be dynamically specified by the AS, or may be a duration value preconfigured in the AS. Usually, the duration may be determined based on a time (T1) at which the core network pages (pages) the terminal and the terminal successfully completes a service request (service request). For example, the timing duration of the first timer is slightly greater than the foregoing time (T1).

In other words, after sending the session activation request message and waiting for a period of time (timing duration of the first timer), the AS considers that the user that has joined the MBS session enters the connected state. In this way, the service data may be sent over the MBS session.

### Manner 3: Step 1909 to step 1913

Step 1909: The MB-UPF sends the first data to the UE through a RAN. For descriptions of the first data, refer to the foregoing descriptions. Details are not described herein again.

Step 1910: The MB-UPF sends the first data to the UE through a unicast-serving UPF and the RAN.

It should be noted that the MB-UPF may send the first data to one or more UEs served by the MB-UPF. When the RAN in which the UE is located supports multicast, the first data may be sent to the UEs by implementing step 1909. When the RAN in which the UE is located does not support multicast, the first data may be sent to the UE by implementing step 1910.

Step 1911: The terminal processes the first data.

In a possible implementation, if the first data is a copy of the service data, the terminal may choose to directly discard the information. Alternatively, the terminal may process only the copy, and may not process the first data when receiving the first data again.

It should be noted that whether the MBS session is active or not has no impact because step 1911 is processing on the terminal side.

Step 1912: After receiving the first data, the UE may send a second notification message to the AS.

The second notification message is used to respond to or acknowledge the first data, and further indicates that the first data is successfully received.

Step 1913: The AS determines, based on the received second notification message, to transmit the service data over the MBS.

For example, the AS may count received second notification messages, and determine whether users reporting the second notification messages reach a first threshold, where the first threshold may be an integer greater than 0. If the users reporting the second notification messages reach the first threshold, the AS determines that the service data may be sent over the MBS session. For example, if all UEs that have joined the MBS session feed back the second notification messages, the AS determines that the service data may be sent over the MBS session. If the users reporting the second notification messages does not reach the first threshold, the AS determines that the service data cannot be sent over the MBS session. For another example, if all of (one or more) specific users expected by the service feed back the second notification messages, the AS determines that the service data may be sent over the MBS session. If at least one user of the specific users expected by the service does not feed back the second notification messages, the AS determines that the service data cannot be sent over the MBS session.

### Manner 4 (not shown in the figure)

In manner 4, the AS requests for or subscribes to, from the core network device, the status of the MBS session and/or the connection status of the UE that has joined the MBS session. For a specific implementation, refer to the manners of obtaining the first information in FIG. 6 to FIG. 16. The AS determines that the service data can be sent over the MBS session when the core network device indicates that the status of the MBS session changes into the active state, and/or the AS determines, based on the connection status of the UE that has joined the MBS session, that a quantity of UEs that have joined the MBS session and that are in the idle state and/or inactive state is less than or equal to a second threshold or that a quantity of UEs that have joined the MBS session and that are in the connected mode is greater than or equal to a third threshold, and/or all of the (one or more) terminals related to the specific users expected by the service enter the connected state. The terminal related to the user may be a terminal that belongs to the user, or a terminal that is used by the user or that is used for account login, where the user accesses a service and receives service data with the terminal.

In this way, in the foregoing manner, the AS determines that the service data may be sent over the MBS session, and may subsequently perform step 1914.

Step 1914: The AS sends the service data to the MB-UPF.

In a possible implementation, the AS sends the service data to the UE over the MBS session when at least one of the following conditions is met: The session activation response message is received; the first timer expires; a notification indicating that the MBS session changes into the active state is received; and the users reporting the second notification messages reach the first threshold.

Step 1915: The MB-UPF sends the service data to the UE through the RAN.

Specifically, the MB-UPF may send the service data through PTP or PTM.

Step 1916: The MB-UPF sends the service data to the UE through the UPF and the RAN.

Specifically, the MB-UPF may send the service data to the unicast-serving UPF, and then the unicast-serving UPF sends the service data to the UE by using a unicast PDU session.

Similarly, the MB-UPF may send the service data to one or more UEs served by the MB-UPF. When the RAN in which the UE is located supports multicast, the service data may be sent to the UEs by implementing step 1915. When the RAN in which the UE is located does not support multicast, the service data may be sent to the UE by implementing step 1916.

In this way, according to the foregoing technical solution, it can be ensured that the MBS session is in the active state (in other words, it can be ensured that the UE that has joined the MBS session is in the connected state) before the AS sends the service data to reduce a probability of packet loss.

It may be understood that, to implement the functions in the foregoing embodiments, the communication apparatus includes corresponding hardware structures and/or software modules for performing the functions. A person skilled in the art should be easily aware that, with reference to units and method steps in the examples described in embodiments disclosed in this application, this application can be implemented in a form of hardware or a combination of hardware and computer software. Whether a function is performed by hardware or hardware driven by computer software depends on particular application scenarios and design constraints of the technical solutions.

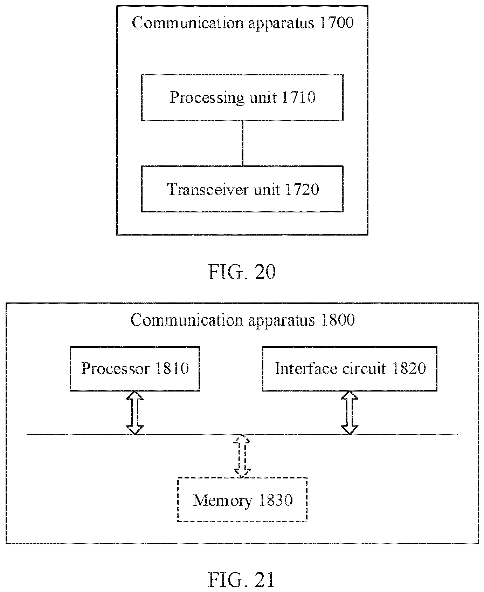

FIG. 20 and FIG. 21 are schematic diagrams of structures of possible communication apparatuses according to embodiments of this application. These communication apparatuses may be configured to implement functions of the application server, the terminal, or the core network device in the foregoing method embodiments, and therefore can also achieve beneficial effects of the foregoing method embodiments.

As shown in FIG. 20, a communication apparatus 1700 includes a processing unit 1710 and a transceiver unit 1720.

When the communication apparatus 1700 is configured to implement a function of the application server in the method embodiment:
In an implementation, the transceiver unit 1720 is configured to obtain first information of a multicast broadcast service session; and the transceiver unit 1720 is further configured to send data of a service based on the first information over the multicast broadcast service session.

Optionally, the first information includes at least one of the following: information about at least one terminal related to the multicast broadcast service session, a status or an association event of the multicast broadcast service session, and a connection status of a terminal that has joined the multicast broadcast service session, where the at least one terminal is provided with the service by the application server.

Optionally, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

Optionally, the status or association event of the multicast broadcast service session includes at least one of the following: A terminal joins the multicast broadcast service session, a terminal leaves the multicast broadcast service session, and the multicast broadcast service session changes into an active state.

Optionally, the processing unit 1710 is configured to determine, based on the first information, that a quantity of terminals that have joined the multicast broadcast service session reaches a preset value, that a specific terminal has joined the multicast broadcast service session, or that the multicast broadcast service session changes into the active state; and the transceiver unit 1720 is configured to send the data of the service over the multicast broadcast service session.

Optionally, if a first terminal has joined the multicast broadcast service session, the transceiver unit 1720 is further configured to stop sending the data of the multicast broadcast service to the first terminal through unicast; or if a second terminal has joined the multicast broadcast service session and the second terminal is in an idle state, the transceiver unit 1720 is further configured to send the data of the multicast broadcast service to the second terminal through unicast.

Optionally, the transceiver unit 1720 is further configured to obtain second information of the multicast broadcast service session, and stop sending data of the service based on the second information over the multicast broadcast service session.

Optionally, the second information includes at least one of the following: the information about the at least one terminal related to the multicast broadcast service session, the status or association event of the multicast broadcast service session, and the connection status of the terminal that has joined the multicast broadcast service session, where the at least one terminal is provided with the service by the application server.

Optionally, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

Optionally, the status or association event of the multicast broadcast service session includes at least one of the following: A terminal joins the multicast broadcast service session, a terminal leaves the multicast broadcast service session, a last terminal of the service has left the multicast broadcast service session, and the multicast broadcast service session changes into an inactive state.

Optionally, the processing unit 1710 is further configured to determine, based on the second information, that a quantity of terminals that have joined the multicast broadcast service session does not reach a preset value, that a specific terminal has left the multicast broadcast service session, that the last terminal of the service has left the multicast broadcast service session, or that the multicast broadcast service session changes into the inactive state; and the transceiver unit 1720 is configured to stop sending the data of the service over the multicast broadcast service session.

Optionally, before obtaining the first information of the multicast broadcast service session, the processing unit 1710 is further configured to determine that the data of the service is to be sent; and the transceiver unit 1720 is further configured to send seventh information to a core network device, where the seventh information is used to activate the multicast broadcast service session.

Optionally, before sending the seventh information to the core network device, the transceiver unit 1720 is further configured to obtain the status of the multicast broadcast service session and/or the connection status of the terminal that has joined the multicast broadcast service session; and the processing unit 1710 is further configured to determine to initiate a multicast broadcast service session activation procedure when at least one of the following cases is met: The multicast broadcast service session is in the inactive state; a quantity of terminals that have joined the multicast broadcast service session and that are in the idle state and/or inactive state reaches a second threshold; and a quantity of terminals that have joined the multicast broadcast service session and that are in a connected state is less than a third threshold.

Optionally, before obtaining the first information of the multicast broadcast service session, the processing unit 1710 is further configured to determine that the data of the service is to be sent; and the transceiver unit 1720 is specifically configured to determine, based on the first information, that the multicast broadcast service session is in an inactive state, and/or that a quantity of terminals that have joined the multicast broadcast service session and that are in an idle state and/or inactive state reaches a second threshold, and/or that a quantity of terminals that have joined the multicast broadcast service session and that are in a connected state is less than a third threshold; the transceiver unit 1720 is specifically configured to send seventh information to a core network device, where the seventh information is used to activate the multicast broadcast service session; and the transceiver unit 1720 is specifically configured to send the data of the service over the multicast broadcast service session when a trigger condition is met.

Optionally, the core network device is a session management function serving the multicast broadcast service session, and the seventh information is a session activation request message; or the core network device is a user plane function serving the multicast broadcast service session, and the seventh information is user plane data.

Optionally, the user plane data is at least one copy of the data of the service; or the user plane data is a subset of the data of the service; or the user plane data is control plane signaling information related to the data of the service; or the user plane data is redundant data.

Optionally, the trigger condition includes at least one of the following: A session activation response message from a session management function serving the multicast broadcast service session is received, where the session activation response message indicates that the multicast broadcast service session is successfully activated or the session management function serving the multicast broadcast service session accepts a request for activating the multicast broadcast service session; a notification message from the session management function serving the multicast broadcast service session is received, where the notification message indicates that the multicast broadcast service session changes into an active state; a first timer expires, where the first timer is started after the application server sends the seventh information; and an amount of received eighth information reaches a first threshold, where the eighth information is from a terminal and indicates that the terminal successfully receives the seventh information, and the seventh information is user plane data.

Optionally, the transceiver unit 1720 is specifically configured to receive the first information from the core network device.

Optionally, the transceiver unit 1720 is further configured to request for or subscribe to the first information from the core network device.

Optionally, the transceiver unit 1720 is specifically configured to send a first request message or a subscription message to the core network device, where the first request message is used to request for the first information, the subscription message is used for subscription to the first information, and the first request message or the subscription message includes a multicast broadcast service session identity.

Optionally, the first request message or the subscription message further includes an identifier of the at least one terminal and/or an identifier of a group corresponding to the multicast broadcast service session.

Optionally, the core network device is UDM, a multicast-serving SMF, a unicast-serving SMF, or an AMF.

Optionally, the transceiver unit 1720 is specifically configured to receive the first information from the at least one terminal, where the at least one terminal is provided with the service by the application server.

Optionally, the transceiver unit 1720 is further configured to send a first message to the terminal of the service, where the first message is used to trigger report of the first information.

Optionally, a type or name of the first message indicates that a type of the multicast broadcast service session is multicast; or the first message includes fourth information, where the fourth information indicates that the type of the multicast broadcast service session is multicast.

Optionally, the first message carries the fourth information by using a format or type of a multicast broadcast service session identity or a session type parameter.

Optionally, the transceiver unit 1720 is further configured to send fifth information to the terminal of the service, where the fifth information includes a join mode of the multicast broadcast service session.

Optionally, when the join mode of the multicast broadcast service session includes at least two join modes, the fifth information further includes priorities of the at least two join modes.

Optionally, the transceiver unit 1720 is further configured to obtain sixth information, where the sixth information includes a join mode supported by the terminal of the service; and the processing unit 1710 is further configured to determine the join mode of the multicast broadcast service session based on the join mode supported by the terminal of the service.

Optionally, the join mode of the multicast broadcast service session includes at least one of the following: a user plane mode, a control plane mode, or both the user plane mode and the control plane mode.

In another implementation, the processing unit 1710 is configured to determine that data of a service is to be sent; and send seventh information to the core network device, where the seventh information is used to activate the multicast broadcast service session; and the transceiver unit 1720 is configured to send the data of the service over the multicast broadcast service session when a trigger condition is met.

Optionally, the core network device is the session management function serving the multicast broadcast service session, and the seventh information is a session activation request message; or the core network device is a user plane function serving the multicast broadcast service session, and the seventh information is user plane data.

Optionally, the user plane data is at least one copy of the data of the service; or the user plane data is a subset of the data of the service; or the user plane data is control plane signaling information related to the data of the service; or the user plane data is redundant data.

Optionally, the trigger condition includes at least one of the following: A session activation response message from the session management function serving the multicast broadcast service session is received, where the session activation response message indicates that the multicast broadcast service session is successfully activated or the session management function serving the multicast broadcast service session accepts a request for activating the multicast broadcast service session; a notification message from the session management function serving the multicast broadcast service session is received, where the notification message indicates that the multicast broadcast service session changes into an active state; a first timer expires, where the first timer is started after the application server sends the seventh information; and an amount of received eighth information reaches a first threshold, where the eighth information is from a terminal and indicates that the terminal successfully receives the seventh information, and the seventh information is user plane data.

Optionally, the transceiver unit 1720 is further configured to obtain the status of the multicast broadcast service session and/or the connection status of the terminal that has joined the multicast broadcast service session; and the processing unit 1710 is further configured to determine to initiate a multicast broadcast service session activation procedure when at least one of the following cases is met: The multicast broadcast service session is in the inactive state; a quantity of terminals that have joined the multicast broadcast service session and that are in the idle state and/or inactive state reaches a second threshold; and a quantity of terminals that have joined the multicast broadcast service session and that are in a connected state is less than a third threshold.

When the communication apparatus 1700 is configured to implement a function of the terminal in the method embodiment:
In an implementation, the transceiver unit 1720 is configured to obtain first information of a multicast broadcast service session; and the transceiver unit 1720 is further configured to send the first information to an application server.

Optionally, the first information includes at least one of the following: The terminal has joined the multicast broadcast service session, the terminal has activated the multicast broadcast service session, the terminal has left the multicast broadcast service session, the terminal has deactivated the multicast broadcast service session, the terminal has suspended the multicast broadcast service session, and the terminal has switched from a first communication system to a second communication system and joined the multicast broadcast service session, where the first communication system does not support multicast, and the second communication system supports multicast.

Optionally, the transceiver unit 1720 is further configured to receive a first message from the application server, where the first message is used to trigger report of the first information; and the transceiver unit 1720 is specifically configured to send the first information to the application server based on the first message.

Optionally, the first message includes a condition for triggering report of the first information.

Optionally, the transceiver unit 1720 is further configured to receive third information from the application server, where the third information indicates that a type of the multicast broadcast service session is multicast; and the processing unit 1710 determines, based on the third information, that the type of the multicast broadcast service session is multicast.

Optionally, the processing unit 1710 is specifically configured to determine, based on a type or name of the first message or fourth information included in the first message, that a type of the multicast broadcast service session is multicast, where the fourth information indicates that the type of the multicast broadcast service session is multicast.

Optionally, the first message carries the fourth information by using a format or type of a multicast broadcast service session identity or a session type parameter.

Optionally, the transceiver unit 1720 is further configured to receive fifth information from the application server, where the fifth information includes a join mode in which the terminal joins the multicast broadcast service session; and the processing unit 1710 is specifically configured to join the multicast broadcast service session based on the fifth information.

Optionally, when the join mode of the multicast broadcast service session includes at least two join modes, the fifth information further includes priorities of the at least two join modes.

Optionally, the transceiver unit 1720 is further configured to send sixth information to the application server, where the sixth information includes a join mode supported by the terminal.

Optionally, the join mode of the multicast broadcast service session includes at least one of the following: a user plane mode, a control plane mode, or both the user plane mode and the control plane mode.

Optionally, the transceiver unit 1720 is further configured to receive seventh information from the application server, where the seventh information is user plane data; and send eighth information to the application server, where the eighth information indicates that the seventh information is successfully received.

Optionally, the user plane data is at least one copy of the data of the service; or the user plane data is a subset of the data of the service; or the user plane data is control plane signaling information related to the data of the service; or the user plane data is redundant data.

Optionally, the processing unit 1710 is further configured to discard the seventh information.

When the communication apparatus 1700 is configured to implement a function of the core network device in the method embodiment:
The transceiver unit 1720 is configured to obtain first information of a multicast broadcast service session.

The transceiver unit 1720 is further configured to send the first information to an application server.

Optionally, the first information includes at least one of the following: information about at least one terminal related to the multicast broadcast service session, a status or an association event of the multicast broadcast service session, and a connection status of a terminal that has joined the multicast broadcast service session, where the at least one terminal is provided with the service by the application server.

Optionally, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

Optionally, the status or association event of the multicast broadcast service session includes at least one of the following: A terminal joins the multicast broadcast service session, a terminal leaves the multicast broadcast service session, and the multicast broadcast service session changes into an active state.

Optionally, the transceiver unit 1720 is further configured to obtain second information of the multicast broadcast service session; and send the second information to the application server.

Optionally, the second information includes at least one of the following: the information about at least one terminal related to the multicast broadcast service session, the status or association event of the multicast broadcast service session, and the connection status of the terminal that has joined the multicast broadcast service session, where the at least one terminal is provided with the service by the application server.

Optionally, the information about the terminal related to the multicast broadcast service session includes at least one of the following: The terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, where the first communication system does not support multicast, and the second communication system supports multicast.

Optionally, the status or association event of the multicast broadcast service session includes at least one of the following: A terminal joins the multicast broadcast service session, a terminal leaves the multicast broadcast service session, a last terminal of the service has left the multicast broadcast service session, and the multicast broadcast service session changes into an inactive state.

Optionally, the transceiver unit 1720 is further configured to receive a first request message or a subscription message from the application server, where the first request message is used to request for the first information, the subscription message is used for subscription to the first information, and the first request message or the subscription message includes a multicast broadcast service session identity.

Optionally, the first request message or the subscription message further includes an identifier of the at least one terminal and/or an identifier of a group corresponding to the multicast broadcast service session.

Optionally, the core network device is UDM, a multicast-serving SMF, a unicast-serving SMF, or an AMF.

Optionally, when the core network device is the UDM or the multicast-serving SMF, the transceiver unit 1720 is specifically configured to obtain the first information from the unicast-serving SMF or the AMF.

For more detailed descriptions about the processing unit 1710 and the transceiver unit 1720, refer directly to related descriptions in the method embodiments. Details are not described herein again.

As shown in FIG. 21, a communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830 configured to store instructions executed by the processor 1810, input data required by the processor 1810 to run the instructions, or data generated after the processor 1810 runs the instructions.

When the communication apparatus 1800 is configured to implement the method in the method embodiment, the processor 1810 is configured to implement a function of the processing unit 1710, and the interface circuit 1820 is configured to implement a function of the transceiver unit 1720.

When the foregoing communication apparatus is a chip applied to an application server, the chip implements a function of the application server in the foregoing method embodiment. The chip receives information from another module (for example, a radio frequency module or an antenna) in the application server, where the information is sent by another apparatus to the application server; or the chip sends information to another module (for example, a radio frequency module or an antenna) in the application server, where the information is sent by the application server to another apparatus.

When the foregoing communication apparatus is a chip applied to a terminal, the chip implements a function of the terminal in the foregoing method embodiment. The chip receives information from another module (for example, a radio frequency module or an antenna) in the terminal, where the information is sent by another apparatus to the terminal; or the chip sends information to another module (for example, a radio frequency module or an antenna) in the terminal, where the information is sent by the terminal to another apparatus.

When the foregoing communication apparatus is a chip applied to a core network device, the chip implements a function of the core network device in the foregoing method embodiment. The chip receives information from another module (for example, a radio frequency module or an antenna) in the core network device, where the information is sent by another apparatus to the core network device; or the chip sends information to another module (for example, a radio frequency module or an antenna) in the core network device, where the information is sent by the core network device to another apparatus.

It can be understood that the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by using hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or a storage medium of any other form well-known in the art. For example, a storage medium is coupled to a processor, so that the processor can read information from the storage medium and write information into the storage medium. The storage medium may be a component of the processor. The processor and the storage medium may be in an ASIC. In addition, the ASIC may be located in an application server, a terminal, or a core network device. The processor and the storage medium may alternatively exist in the application server, a terminal, or a core network device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or instructions are loaded and executed on a computer, the procedures or functions according to embodiments of this application are completely or partially implemented. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired manner or in a wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid state drive.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In embodiments of this application, "at least one" means one or more, and "a plurality of" means two or more. The term "and/or" describes an association relationship between associated objects and represents that three relationships may exist. For example, A and/or B may indicate the following cases: A exists alone, both A and B exist, and B exists alone, where A and B may be singular or plural. In the descriptions of this application, the character "/" generally indicates that associated objects are in an "or" relationship. In a formula of this application, the character "/" indicates that associated objects are in a "division" relationship.

It may be understood that various numbers in embodiments of this application are merely used for differentiation for ease of description, and are not intended to limit the scope of embodiments of this application. It should be understood that sequence numbers of the foregoing processes do not mean execution sequences. The execution sequences of the processes should be determined based on functions and internal logic of the processes.

Unless otherwise specified, all technical and scientific terms used in embodiments of this application have same meanings as those usually understood by a person skilled in the art of this application. The terms used in the specification of this application are merely for the purpose of describing specific embodiments, and are not intended to limit this application. It should be understood that the foregoing examples are merely intended to help a person skilled in the art understand embodiments of this application, instead of limiting embodiments of this application to a specific numerical value or a specific scenario shown in the examples. A person skilled in the art can make various equivalent modifications or variations based on the foregoing examples, and such modifications and changes also fall within the scope of embodiments of this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A service data transmission method, comprising:
obtaining, by an application server, first information of a multicast broadcast service session; and
sending, by the application server, data of a service over the multicast broadcast service session based on the first information.

2. The method according to claim 1, wherein the first information comprises at least one of the following: information about at least one terminal related to the multicast broadcast service session, a status or an association event of the multicast broadcast service session, and a connection status of a terminal that has joined the multicast broadcast service session, wherein the at least one terminal is provided with the service by the application server.

3. The method according to claim 2, wherein the information about the terminal related to the multicast broadcast service session comprises at least one of the following: the terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, wherein the first communication system does not support multicast, and the second communication system supports multicast.

4. The method according to claim 2 or 3, wherein the status or association event of the multicast broadcast service session comprises at least one of the following: a terminal joins the multicast broadcast service session, a terminal leaves the multicast broadcast service session, and the multicast broadcast service session changes into an active state.

5. The method according to any one of claims 1 to 4, wherein the sending, by the application server, data of a service over the multicast broadcast service session based on the first information comprises:
determining, by the application server based on the first information, that a quantity of terminals that have joined the multicast broadcast service session reaches a preset value, that a specific terminal has joined the multicast broadcast service session, or that the multicast broadcast service session changes into the active state; and
sending, by the application server, the data of the service over the multicast broadcast service session.

6. The method according to claim 5, wherein the method further comprises:
if a first terminal has joined the multicast broadcast service session, stopping, by the application server, sending the data of the service to the first terminal through unicast; or
if a second terminal has joined the multicast broadcast service session and the second terminal is in an idle state, sending, by the application server, the data of the service to the second terminal through unicast.

7. The method according to any one of claims 1 to 6, wherein the method further comprises:
obtaining, by the application server, second information of the multicast broadcast service session; and
stopping, by the application server, sending the data of the service over the multicast broadcast service session based on the second information.

8. The method according to claim 7, wherein the second information comprises at least one of the following: the information about the at least one terminal related to the multicast broadcast service session, the status or association event of the multicast broadcast service session, and the connection status of the terminal that has joined the multicast broadcast service session, wherein the at least one terminal is provided with the service by the application server.

9. The method according to claim 8, wherein the information about the terminal related to the multicast broadcast service session comprises at least one of the following: the terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and has joined the multicast broadcast service session, wherein the first communication system does not support multicast, and the second communication system supports multicast.

10. The method according to claim 8 or 9, wherein the status or association event of the multicast broadcast service session comprises at least one of the following: a terminal joins the multicast broadcast service session, a terminal leaves the multicast broadcast service session, a last terminal of the service has left the multicast broadcast service session, and the multicast broadcast service session changes into an inactive state.

11. The method according to any one of claims 7 to 10, wherein the stopping, by the application server, sending the data of the service over the multicast broadcast service session based on the second information comprises:
determining, by the application server based on the second information, that a quantity of terminals that have joined the multicast broadcast service session does not reach a preset value, that a specific terminal has left the multicast broadcast service session, that the last terminal of the service has left the multicast broadcast service session, or that the multicast broadcast service session changes into the inactive state; and
stopping, by the application server, sending the data of the service over the multicast broadcast service session.

12. The method according to any one of claims 1 to 11, wherein before the obtaining, by an application server, first information of a multicast broadcast service session, the method further comprises:
determining, by the application server, that the data of the service is to be sent; and
sending, by the application server, seventh information to a core network device, wherein the seventh information is used to activate the multicast broadcast service session.

13. The method according to claim 12, wherein before the sending, by the application server, seventh information to a core network device, the method further comprises:
obtaining, by the application server, the status of the multicast broadcast service session and/or the connection status of the terminal that has joined the multicast broadcast service session; and
determining, by the application server, to initiate a multicast broadcast service session activation procedure when at least one of the following cases is met:
the multicast broadcast service session is in the inactive state;
a quantity of terminals that have joined the multicast broadcast service session and that are in the idle state and/or inactive state reaches a second threshold; and
a quantity of terminals that have joined the multicast broadcast service session and that are in a connected state is less than a third threshold.

14. The method according to claim 1, wherein
before the obtaining, by an application server, first information of a multicast broadcast service session, the method further comprises: determining, by the application server, that the data of the service is to be sent; and
the sending, by the application server, data of a service over the multicast broadcast service session based on the first information comprises: determining, by the application server based on the first information, that the multicast broadcast service session is in an inactive state, and/or that a quantity of terminals that have joined the multicast broadcast service session and that are in an idle state and/or inactive state reaches a second threshold, and/or that a quantity of terminals that have joined the multicast broadcast service session and that are in a connected state is less than a third threshold; sending, by the application server, seventh information to a core network device, wherein the seventh information is used to activate the multicast broadcast service session; and sending, by the application server, the data of the service over the multicast broadcast service session when a trigger condition is met.

15. The method according to claim 14, wherein the trigger condition comprises at least one of the following:
a session activation response message from a session management function serving the multicast broadcast service session is received, wherein the session activation response message indicates that the multicast broadcast service session is successfully activated or the session management function serving the multicast broadcast service session accepts a request for activating the multicast broadcast service session;
a notification message from the session management function serving the multicast broadcast service session is received, wherein the notification message indicates that the multicast broadcast service session changes into an active state;
a first timer expires, wherein the first timer is started after the application server sends the seventh information; and
an amount of received eighth information reaches a first threshold, wherein the eighth information is from a terminal and indicates that the terminal successfully receives the seventh information, and the seventh information is user plane data.

16. The method according to any one of claims 12 to 15, wherein
the core network device is the session management function serving the multicast broadcast service session, and the seventh information is a session activation request message; or
the core network device is a user plane function serving the multicast broadcast service session, and the seventh information is user plane data.

17. The method according to claim 16, wherein
the user plane data is at least one copy of the data of the service; or
the user plane data is a subset of the data of the service; or
the user plane data is control plane signaling information related to the data of the service; or
the user plane data is redundant data.

18. The method according to any one of claims 1 to 17, wherein the obtaining, by an application server, first information of a multicast broadcast service session comprises:
receiving, by the application server, the first information from the core network device.

19. The method according to claim 18, wherein the method further comprises:
requesting for or subscribing to, by the application server, the first information from the core network device.

20. The method according to claim 19, wherein the requesting for or subscribing to, by the application server, the first information from the core network device comprises:
sending, by the application server, a first request message or a subscription message to the core network device, wherein the first request message is used to request for the first information, the subscription message is used for subscription to the first information, and the first request message or the subscription message comprises a multicast broadcast service session identity.

21. The method according to claim 20, wherein the first request message or the subscription message further comprises an identifier of the at least one terminal and/or an identifier of a group corresponding to the multicast broadcast service session, and the at least one terminal is provided with the service by the application server.

22. The method according to any one of claims 18 to 21, wherein the core network device is unified data management UDM, a multicast-serving session management function SMF, a unicast-serving SMF, or an access and mobility management function AMF.

23. The method according to any one of claims 1 to 17, wherein the obtaining, by an application server, first information of a multicast broadcast service session comprises:
receiving, by the application server, the first information from the at least one terminal, wherein the at least one terminal is provided with the service by the application server.

24. The method according to claim 23, wherein the method further comprises:
sending, by the application server, a first message to the terminal of the service, wherein the first message is used to trigger report of the first information.

25. The method according to claim 24, wherein
a type or name of the first message indicates that a type of the multicast broadcast service session is multicast; or
the first message comprises fourth information, wherein the fourth information indicates that the type of the multicast broadcast service session is multicast.

26. The method according to claim 25, wherein the first message carries the fourth information by using a format or type of a multicast broadcast service session identity or a session type parameter.

27. A service data transmission method, comprising:
obtaining, by a terminal, first information of a multicast broadcast service session; and
sending, by the terminal, the first information to an application server.

28. The method according to claim 27, wherein the first information comprises at least one of the following: the terminal has joined the multicast broadcast service session, the terminal has activated the multicast broadcast service session, the terminal has left the multicast broadcast service session, the terminal has deactivated the multicast broadcast service session, the terminal has suspended the multicast broadcast service session, and the terminal has switched from a first communication system to a second communication system and joined the multicast broadcast service session, wherein the first communication system does not support multicast, and the second communication system supports multicast.

29. The method according to claim 27 or 28, wherein the method further comprises:
receiving, by the terminal, a first message from the application server, wherein the first message is used to trigger report of the first information; and
the sending, by the terminal, the first information to an application server comprises:
sending, by the terminal, the first information to the application server based on the first message.

30. The method according to claim 29, wherein the first message comprises a condition for triggering report of the first information.

31. The method according to claim 29 or 30, wherein the method further comprises:
determining, by the terminal based on a type or name of the first message or fourth information comprised in the first message, that a type of the multicast broadcast service session is multicast, wherein the fourth information indicates that the type of the multicast broadcast service session is multicast.

32. The method according to claim 31, wherein the first message carries the fourth information by using a format or type of a multicast broadcast service session identity or a session type parameter.

33. The method according to any one of claims 27 to 32, wherein the method further comprises:
receiving, by the terminal, seventh information from the application server, wherein the seventh information is user plane data; and
sending, by the terminal, eighth information to the application server, wherein the eighth information indicates that the seventh information is successfully received.

34. The method according to claim 33, wherein
the user plane data is at least one copy of data of a service; or
the user plane data is a subset of the data of the service; or
the user plane data is control plane signaling information related to the data of the service; or
the user plane data is redundant data.

35. A service data transmission method, comprising:
obtaining, by a core network device, first information of a multicast broadcast service session; and
sending, by the core network device, the first information to an application server.

36. The method according to claim 35, wherein the first information comprises at least one of the following: information about at least one terminal related to the multicast broadcast service session, a status or an association event of the multicast broadcast service session, and a connection status of a terminal that has joined the multicast broadcast service session, wherein the at least one terminal is provided with a service by the application server.

37. The method according to claim 36, wherein the information about the terminal related to the multicast broadcast service session comprises at least one of the following: the terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from a first communication system to a second communication system and joined the multicast broadcast service session, wherein the first communication system does not support multicast, and the second communication system supports multicast.

38. The method according to claim 36 or 37, wherein the status or association event of the multicast broadcast service session comprises at least one of the following: a terminal joins the multicast broadcast service session, a terminal leaves the multicast broadcast service session, and the multicast broadcast service session changes into an active state.

39. The method according to any one of claims 35 to 38, wherein the method further comprises:
obtaining, by the core network device, second information of the multicast broadcast service session; and
sending, by the core network device, the second information to the application server.

40. The method according to claim 39, wherein the second information comprises at least one of the following: the information about the at least one terminal related to the multicast broadcast service session, the status or association event of the multicast broadcast service session, and the connection status of the terminal that has joined the multicast broadcast service session, wherein the at least one terminal is provided with the service by the application server.

41. The method according to claim 40, wherein the information about the terminal related to the multicast broadcast service session comprises at least one of the following: the terminal has joined the multicast broadcast service session, the terminal activates the multicast broadcast service session, the terminal has left the multicast broadcast service session, the terminal deactivates the multicast broadcast service session, the terminal suspends the multicast broadcast service session, and the terminal has switched from the first communication system to the second communication system and joined the multicast broadcast service session, wherein the first communication system does not support multicast, and the second communication system supports multicast.

42. The method according to claim 40 or 41, wherein the status or association event of the multicast broadcast service session comprises at least one of the following: a terminal joins the multicast broadcast service session, a terminal leaves the multicast broadcast service session, a last terminal of the service has left the multicast broadcast service session, and the multicast broadcast service session changes into an inactive state.

43. The method according to any one of claims 35 to 42, wherein the method further comprises:
receiving, by the core network device, a first request message or a subscription message from the application server, wherein the first request message is used to request for the first information, the subscription message is used for subscription to the first information, and the first request message or the subscription message comprises a multicast broadcast service session identity.

44. The method according to claim 43, wherein the first request message or the subscription message further comprises an identifier of the at least one terminal and/or an identifier of a group corresponding to the multicast broadcast service session, and the at least one terminal is provided with the service by the application server.

45. The method according to any one of claims 35 to 44, wherein the core network device is unified data management UDM, a multicast-serving session management function SMF, a unicast-serving SMF, or an access and mobility management function AMF.

46. The method according to claim 45, wherein when the core network device is the UDM or the multicast-serving SMF, the obtaining, by a core network device, first information of a multicast broadcast service session comprises:
obtaining, by the core network device, the first information from the unicast-serving SMF or the AMF.

47. A service data transmission method, comprising:
determining, by an application server, that data of a service is to be sent;
sending, by the application server, seventh information to a core network device, wherein the seventh information is used to activate a multicast broadcast service session; and
sending, by the application server, the data of the service over the multicast broadcast service session when a trigger condition is met.

48. The method according to claim 47, wherein
the core network device is a session management function serving the multicast broadcast service session, and the seventh information is a session activation request message; or
the core network device is a user plane function serving the multicast broadcast service session, and the seventh information is user plane data.

49. The method according to claim 48, wherein
the user plane data is at least one copy of the data of the service; or
the user plane data is a subset of the data of the service; or
the user plane data is control plane signaling information related to the data of the service; or
the user plane data is redundant data.

50. The method according to any one of claims 47 to 49, wherein the trigger condition comprises at least one of the following:
a session activation response message from the session management function serving the multicast broadcast service session is received, wherein the session activation response message indicates that the multicast broadcast service session is successfully activated or the session management function serving the multicast broadcast service session accepts a request for activating the multicast broadcast service session;
a notification message from the session management function serving the multicast broadcast service session is received, wherein the notification message indicates that the multicast broadcast service session changes into an active state;
a first timer expires, wherein the first timer is started after the application server sends the seventh information; and
an amount of received eighth information reaches a first threshold, wherein the eighth information is from a terminal and indicates that the terminal successfully receives the seventh information, and the seventh information is user plane data.

51. The method according to any one of claims 47 to 50, wherein the method further comprises:
obtaining, by the application server, a status of the multicast broadcast service session and/or a connection status of a terminal that has joined the multicast broadcast service session; and
determining, by the application server, to initiate a multicast broadcast service session activation procedure when at least one of the following cases is met:
the multicast broadcast service session is in an inactive state;
a quantity of terminals that have joined the multicast broadcast service session and that are in an idle state and/or inactive state reaches a second threshold; and
a quantity of terminals that have joined the multicast broadcast service session and that are in a connected state is less than a third threshold.

52. A service data transmission method, comprising:
receiving, by a terminal, seventh information from an application server, wherein the seventh information is user plane data; and
sending, by the terminal, eighth information to the application server, wherein the eighth information indicates that the seventh information is successfully received.

53. The method according to claim 52, wherein
the user plane data is at least one copy of data of a service; or
the user plane data is a subset of the data of the service; or
the user plane data is control plane signaling information related to the data of the service; or
the user plane data is redundant data.

54. A communication apparatus, comprising a unit configured to implement the method according to any one of claims 1 to 53.

55. A communication apparatus, comprising:
a processor, configured to execute computer instructions stored in a memory, so that the apparatus is enabled to perform the method according to any one of claims 1 to 53.

56. A computer storage medium, wherein the computer storage medium stores a computer program; and when the computer program is executed by a computer, the method according to any one of claims 1 to 53 is performed.
